# EUROPEAN PATENT APPLICATION

(11) **EP 4 429 206 A1**
(43) Date of publication of application: **11.09.2024**
(21) Application number: 22889319.4
(22) Date of filing: 02.11.2022
(51) Int. Cl.: H04L 67/2866, H04B 17/382

(54) **WIRELESS SENSING COLLABORATION METHOD AND APPARATUS, NETWORK SIDE DEVICE, AND TERMINAL**

(30) Priority: 04.11.2021 CN 202111302242
(71) Applicant: Vivo Mobile Communication Co., Ltd., Dongguan, Guangdong 523863 (CN)
(72) Inventor: DING, Shengli, Dongguan, Guangdong 523863 (CN); YAO, Jian, Dongguan, Guangdong 523863 (CN); JIANG, Dajie, Dongguan, Guangdong 523863 (CN)
(74) Representative: Conti, Marco
(86) International application number: PCT/CN2022/129254
(87) International publication number: WO 2023/078297

(57) **Abstract**

This application provides a wireless sensing collaboration method and apparatus, a network side device, and a terminal, and belongs to the field of communication technologies. The wireless sensing collaboration method according to embodiments of this application includes: A first sensing function network element obtains first sensing requirement information; the first sensing function network element determines a first sensing node and a second sensing node according to the first sensing requirement information, and obtains respective sensing requirement information of the first sensing node and the second sensing node; and the first sensing function network element obtains a target sensing result, where the target sensing result is determined according to results of target collaborative sensing performed by the first sensing node and the second sensing node respectively according to respective sensing requirement information.

## Description

### CROSS-REFERENCE TO RELATED APPLICATIONS

This application claims the priority of Chinese Patent Application No. 202111302242.2 filed in China on November 4, 2021, the entire content of which is hereby incorporated by reference.

### TECHNICAL FIELD

This application relates to the field of communication technologies, and specifically, to a wireless sensing collaboration method and apparatus, a network side device, and a terminal.

### BACKGROUND

In related technologies, sensing and communication systems are usually designed separately and occupy different frequency bands. Due to widespread deployment of millimeter wave and massive multi input multi output (Multiple Input Multi Output, MIMO) technologies, communication signals in future wireless communication systems often have high resolution in both time domain and angle domain. This makes it possible to use communication signals to achieve high-precision sensing. Therefore, it is best to jointly design sensing and communication systems so that the systems share the same frequency band and hardware to improve frequency efficiency and reduce hardware costs. This has prompted research on integrated sensing and communication (Integrated Sensing And Communication, ISAC).

However, in an ISAC scenario, due to limited sensing capabilities of sensing nodes, there is a problem that the sensing nodes cannot meet sensing requirements. As a result, sensing performance of an ISAC system is low.

### SUMMARY

Embodiments of this application provide a wireless sensing collaboration method and apparatus, a network side device, and a terminal, which can solve a problem of low sensing performance of an ISAC system in related technologies.

According to a first aspect, a wireless sensing collaboration method is provided, applied to a first sensing function network element, the method including:
obtaining, by a first sensing function network element, first sensing requirement information;
determining, by the first sensing function network element, a first sensing node and a second sensing node according to the first sensing requirement information, and obtaining respective sensing requirement information of the first sensing node and the second sensing node; and
obtaining, by the first sensing function network element, a target sensing result, where the target sensing result is determined according to results of target collaborative sensing performed by the first sensing node and the second sensing node respectively according to respective sensing requirement information.

According to a second aspect, a wireless sensing collaboration apparatus is provided, used in a first sensing function network element, the apparatus including:
a first obtaining module, configured to obtain first sensing requirement information;
a first determining module, configured to determine a first sensing node and a second sensing node according to the first sensing requirement information, and obtain respective sensing requirement information of the first sensing node and the second sensing node; and
a second obtaining module, configured to obtain a target sensing result, where the target sensing result is determined according to results of target collaborative sensing performed by the first sensing node and the second sensing node respectively according to respective sensing requirement information.

According to a third aspect, a wireless sensing collaboration method is provided, applied to a first sensing node, the method including:
obtaining, by the first sensing node, first sensing requirement information;
determining, by the first sensing node, a type of a target sensing collaboration according to own capability configuration information and the first sensing requirement information, and sending the type of the target sensing collaboration; or
receiving, by the first sensing node, the type of the target sensing collaboration.

According to a fourth aspect, a wireless sensing collaboration apparatus is provided, used in a first sensing node, the apparatus including:
a third obtaining module, configured to obtain first sensing requirement information;
a second determining module, configured to determine a type of a target sensing collaboration according to own capability configuration information and the first sensing requirement information, and send the type of the target sensing collaboration; or
a first receiving module, configured to receive the type of the target sensing collaboration.

According to a fifth aspect, a wireless sensing collaboration method is provided, applied to a core network element, the method including:
receiving, by the core network element, second sensing requirement information from a first sensing function network element;
determining, by the core network element according to the second sensing requirement information and a sensing service type supported by each sensing function network element, a second sensing function network element used for target collaborative sensing with the first sensing function network element, and determining a second sensing node scheduled by the second sensing function network element or receiving identification information of the second sensing node from the second sensing function network element; or
determining, by the core network element, a third sensing function network element according to the second sensing requirement information, determining the third sensing function network element that supports a sensing service type corresponding to the second sensing requirement information as the second sensing function network element, and determining a second sensing node scheduled by the second sensing function network element or receiving identification information of the second sensing node from the second sensing function network element; and
sending, by the core network element, the second sensing requirement information to the second sensing node.

According to a sixth aspect, a wireless sensing collaboration apparatus is provided, used in a core network element, the apparatus including:
a fourth obtaining module, configured to receive second sensing requirement information from a first sensing function network element;
a third determining module, configured to determine, according to the second sensing requirement information and a sensing service type supported by each sensing function network element, a second sensing function network element used for target collaborative sensing with the first sensing function network element, and determine a second sensing node scheduled by the second sensing function network element or receive identification information of the second sensing node from the second sensing function network element; or
a fourth determining module, configured to determine a third sensing function network element according to the second sensing requirement information, determine the third sensing function network element that supports a sensing service type corresponding to the second sensing requirement information as the second sensing function network element, and determine a second sensing node scheduled by the second sensing function network element or receive identification information of the second sensing node from the second sensing function network element; and
a first sending module, configured to send the second sensing requirement information to the second sensing node.

According to a seventh aspect, a network side device is provided. The network side device includes a processor, a memory, and a program or instructions stored in the memory and executable on the processor, where the program or the instructions, when executed by the processor, implement the steps of the method according to the first aspect, the second aspect, or the third aspect.

According to an eighth aspect, a network side device is provided, including a processor and a communication interface. The communication interface is configured to obtain first sensing requirement information; the processor is configured to determine a first sensing node and a second sensing node according to the first sensing requirement information, and obtain respective sensing requirement information of the first sensing node and the second sensing node; and the processor or the communication interface is further configured to obtain a target sensing result, where the target sensing result is determined according to results of target collaborative sensing performed by the first sensing node and the second sensing node respectively according to respective sensing requirement information;
or
the communication interface is configured to obtain first sensing requirement information; the processor is configured to determine a type of a target sensing collaboration according to capability configuration information of a first sensing node and the first sensing requirement information, and the communication interface is further configured to send the type of the target sensing collaboration; or the communication interface is configured to receive the type of the target sensing collaboration;
   or
the communication interface is configured to receive second sensing requirement information from a first sensing function network element; the processor is configured to determine, according to the second sensing requirement information and a sensing service type supported by each sensing function network element, a second sensing function network element used for target collaborative sensing with the first sensing function network element, and determine a second sensing node scheduled by the second sensing function network element or receive identification information of the second sensing node from the second sensing function network element; or the processor is configured to determine a third sensing function network element according to the second sensing requirement information, determine the third sensing function network element that supports a sensing service type corresponding to the second sensing requirement information as the second sensing function network element, and determine a second sensing node scheduled by the second sensing function network element or receive identification information of the second sensing node from the second sensing function network element; and the communication interface is further configured to send the second sensing requirement information to the second sensing node.

According to a ninth aspect, a terminal is provided. The terminal includes a processor, a memory, and a program or instructions stored in the memory and executable on the processor, the program or the instructions, when executed by the processor, implementing the steps of the method according to the fifth aspect.

According to a tenth aspect, a terminal is provided, including a processor and a communication interface. The communication interface is configured to obtain first sensing requirement information; the processor is configured to determine a type of a target sensing collaboration according to capability configuration information of a first sensing node and the first sensing requirement information, and the communication interface is further configured to send the type of the target sensing collaboration; or the communication interface is configured to receive the type of the target sensing collaboration.

According to an eleventh aspect, a readable storage medium is provided, storing a program or instructions, the program or the instructions, when executed by a processor, implementing the steps of the method according to the first aspect, the third aspect, or the fifth aspect.

According to a twelfth aspect, a chip is provided, where the chip includes a processor and a communication interface, the communication interface is coupled to the processor, and the processor is configured to run a program or instructions to implement the method according to the first aspect, the third aspect, or the fifth aspect.

According to a thirteenth aspect, a computer program product is provided, where the computer program product is stored in a non-transient storage medium, and the computer program product is executed by at least one processor to implement the steps of the wireless sensing collaboration method according to the first aspect, the third aspect, or the fifth aspect.

In this embodiment of this application, the first sensing function network element obtains first sensing requirement information; the first sensing function network element determines a first sensing node and a second sensing node according to the first sensing requirement information, and obtains respective sensing requirement information of the first sensing node and the second sensing node; and the first sensing function network element obtains a target sensing result, where the target sensing result is determined according to results of target collaborative sensing performed by the first sensing node and the second sensing node respectively according to respective sensing requirement information. In this way, when one sensing node cannot meet the first sensing requirement information, the first sensing function network element can select at least two sensing nodes and determine requirement information of each sensing node, to perform target collaborative sensing through the at least two sensing nodes respectively according to respective sensing requirement information, so that a target sensing result that meets the first sensing requirement information can be obtained, thereby improving the sensing performance.

### BRIEF DESCRIPTION OF THE DRAWINGS

FIG. 1 is a block diagram of a wireless communication system to which an embodiment of this application can be applied;
FIG. 2 is a flowchart of a first wireless sensing collaboration method according to an embodiment of this application;
FIG. 3 is a flowchart of a second wireless sensing collaboration method according to an embodiment of this application;
FIG. 4 is a flowchart of a third wireless sensing collaboration method according to an embodiment of this application;
FIG. 5 is a schematic structural diagram of a first wireless sensing collaboration apparatus according to an embodiment of this application;
FIG. 6 is a schematic structural diagram of a second wireless sensing collaboration apparatus according to an embodiment of this application;
FIG. 7 is a schematic structural diagram of a third wireless sensing collaboration apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network side device according to an embodiment of this application.

### DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish similar objects, but are not used to describe a specific sequence or order. It should be understood that the terms used in this way are interchangeable in a proper case, so that embodiments of this application can be implemented in other orders than the orders illustrated or described herein. Moreover, the objects distinguished by "first" and "second" are usually of one type, and the quantity of objects is not limited. For example, there may be one or more first objects. In addition, "and/or" in the description and claims represents at least one of connected objects, and the character "/" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6^{th} generation (6^{th} Generation, 6G) communication system.

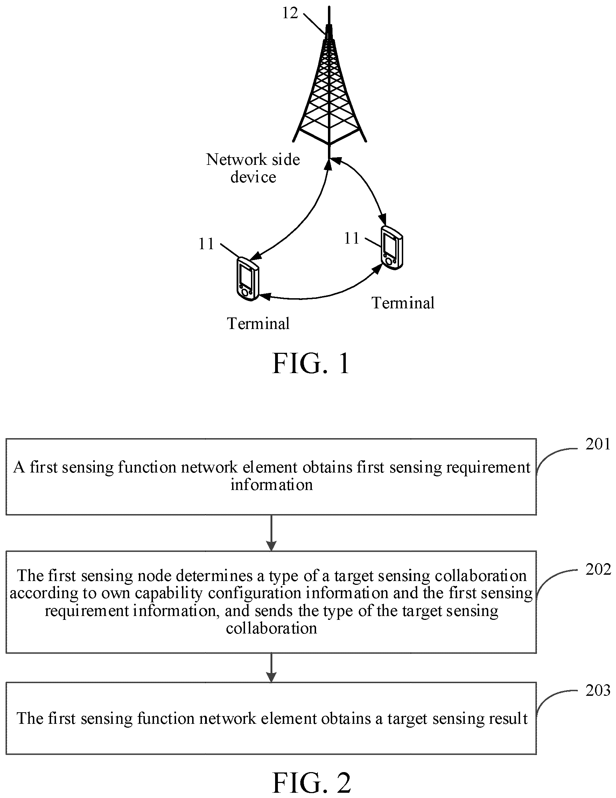

FIG. 1 is a block diagram of a wireless communication system to which an embodiment of this application can be applied. The communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), or smart home (home equipment with wireless communication functions, such as a refrigerator, a TV, a washing machine, or furniture). The wearable device includes: a smart watch, a smart band, smart headphones, smart glasses, smart jewelry (a smart bracelet, a smart bracelet, a smart ring, a smart necklace, a smart anklet, a smart anklet, and the like), a smart wristband, smart clothing, a game console, and the like. It should be noted that in embodiments of this application, a specific type of the terminal 11 is not limited. The network side device 12 may be a base station or a core network element, where the base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (Evolved Node B, eNB), a Home Node B, a Home evolved Node B, a wireless local area network (Wireless Local Area Network, WLAN) access point, a Wi-Fi Node, a transmitting receiving point (Transmitting Receiving Point, TRP), or another suitable term in the field. As long as the same technical effect is achieved, the base station is not limited to a specific technical vocabulary. It should be noted that, only a base station in an NR system is used as an example in the embodiments of this application, and the specific type of the base station is not limited.

In the wireless communication system, it is expected to provide various high-precision sensing services, such as indoor positioning for robot navigation, Wi-Fi sensing for smart homes, and radar sensing for autonomous vehicles. In related technologies, sensing and communication systems are usually designed separately and occupy different frequency bands.

In this application, considering widespread deployment of millimeter wave and massive MIMO technologies, communication signals in future wireless communication systems often have high resolution in both time domain and angle domain. This makes it possible to use communication signals to achieve high-precision sensing. Therefore, it is best to jointly design sensing and communication systems so that the systems share the same frequency band and hardware to improve frequency efficiency and reduce hardware costs. This has prompted research on integrated sensing and communication (Integrated Sensing And Communication, ISAC).

ISAC is to become a key technology in future wireless communication systems to support many important application scenarios. For example, in a future autonomous vehicle network, an autonomous vehicle obtains a large amount of information from the network, including ultra-high-resolution maps and near-real-time information, to navigate and avoid upcoming traffic jams. In the same context, a radar sensor in the autonomous vehicle should be able to provide powerful and high-resolution obstacle detection functions with resolutions on the order of centimeters. An ISAC technology for autonomous vehicles offers the possibility to achieve high data rate communication and high-resolution obstacle detection using the same hardware and spectrum resources. Other applications of ISAC include Wi-Fi-based indoor positioning and activity recognition, drone communication and sensing, extended reality (Extended Reality, XR), radar and communication integration, and the like. Each application has different requirements, limitations, and regulatory issues. ISAC has attracted huge research interest and attention from academia and industry.

ISAC achieves integrated low-cost implementation of dual functions of communication and sensing through hardware device sharing and software-defined functions. Its main features are: first, unified and simplified architecture; second, reconfigurable and scalable functions; and third, improved efficiency and reduced costs. The advantages of integrated sensing and communication mainly include three aspects: first, reduced equipment cost and size, second, improved spectrum utilization, and third, improved system performance.

Academic circles usually divide the development of ISAC into four stages: coexistence stage, co-operation stage, co-design stage, and co-collaboration stage.

The coexistence stage indicates that a communication system and a sensing system are two separate systems, and interfere with each other. The main methods to solve the interference are: distance isolation, frequency band isolation, time-division operation, MIMO technology, precoding, and the like.

The co-operation stage indicates that the communication system and the sensing system share a hardware platform and use shared information to improve common performance. The power allocation between the two has a greater impact on system performance. The main problems are: low signal-to-noise ratio, mutual interference, and low throughput rate.

The co-design stage indicates that the communication system and the sensing system have become a complete joint system, including joint signal design, waveform design, coding design, and the like. In the early stage, there are linear frequency modulation waveforms, spread spectrum waveforms, and the like, and later focused on OFDM waveforms, MIMO technology, and the like.

The co-collaboration stage indicates that a plurality of integrated sensing and communication nodes collaborate with each other to achieve common goals. For example, radar detection information is shared through communication data transmission. Typical scenarios include driving assistance systems, radar-assisted communication, and the like.

However, the research on the sensing system in the integrated sensing and communication scenario in related technologies only focuses on the research on the sensing method of a single sensing node or a single sensing function, and a sensing capability of a single sensing node may not be able to meet sensing requirements in actual application scenarios. In this regard, according to the wireless sensing collaboration method provided in embodiments of this application, whether at least two sensing nodes and/or at least two sensing functions are needed for collaborative sensing can be determined according to sensing requirements. After determining that at least two sensing nodes and/or at least two sensing functions are needed, the at least two sensing nodes and/or at least two sensing functions are controlled to perform corresponding collaborative sensing to obtain a sensing result that meets the sensing requirements.

The wireless sensing collaboration method and apparatus, a network side device, and a terminal provided in embodiments of this application are described in detail below with reference to the accompanying drawings by using some embodiments and application scenarios.

Refer to FIG. 2. An execution body of a first wireless sensing collaboration method provided in this application may be a first sensing function network element. As shown in FIG. 2, the first wireless sensing collaboration method may include the following steps:

Step 201: The first sensing function network element obtains first sensing requirement information.

In a specific implementation, the first sensing function network element may be a network element among core network elements that is used to implement a sensing function. This is not specifically limited herein.

In an implementation, the first sensing requirement information may be requirement information of a first sensing requirement initiated by a third-party application or a terminal. For example, the first sensing requirement information may be sensing requirement information in an integrated communication and sensing scenario as shown in Table 1 below:

**Table 1**

| Wireless sensing category | Sensing function | Application purpose |
|---|---|---|
| Large scale macro Sensing | Weather, air quality, and the like | Meteorology, agriculture, and daily life service |
| | Traffic flow (intersection), and pedestrian flow (subway entrance) | Smart city, smart transportation, and business service |
| | Animal activities, migration, and the like | Animal husbandry, ecological environment protection, and the like |
| | Target tracking, ranging, speed measurement, contour, and the like | Many application scenarios of conventional radar |
| | 3D map construction | Intelligent driving, navigation, and smart city |
| Close range and refined sensing | Action gesture recognition | Smart interaction for smartphones, games, and smart home |
| | Heartbeat/breathing, and the like | Health and medical care |
| | Imaging, material detection, and the like | Security inspection, industry, and the like |

The first sensing function network element may receive the first sensing requirement information from the third-party application or the terminal. For example, the third-party application sends the first sensing requirement information to an application server, and the application server sends the first sensing requirement information to a core network element. The core network element selects a corresponding sensing function network element according to the first sensing requirement information, and sends the first sensing requirement information to the sensing function network element. In another example, user equipment (User Equipment, UE) sends the first sensing requirement information to the core network element through non access stratum (Non Access Stratum, NAS) signaling, and the core network element selects the corresponding sensing function network element according to the first sensing requirement information, and sends the first sensing requirement information to the selected sensing function network element.

Optionally, the first sensing requirement information includes at least one of the following: a sensing target, sensing target prior information, a sensing indicator, and a sensing measurement quantity.

The sensing target includes at least one of the following:
(1) Target feature: It refers to a physical or chemical feature of a sensing object, such as position (rectangular coordinates or spherical coordinates relative to a reference point), distance, speed, acceleration, size, radar cross section (Radar Cross Section), material composition, and temperature.
(2) Target environment: It refers to a physical or chemical feature of a sensing area, such as ambient temperature, ambient humidity, rainfall, liquid water content in the air (fog), snowfall, air wind, atmospheric pressure, environmental electromagnetic feature (including reflection clutter, signal interference, and the like), and building/vegetation distribution.
(3) Target event: It refers to an event in which the foregoing target feature of the sensing object changes, or/and an event in which the foregoing target environment of the sensing area changes, such as breathing, heartbeat, falling, gesture, pedestrian/vehicle crossing, and animal migration.

The foregoing sensing target prior information includes at least one of the following:
(1) Prior information of the target feature: It refers to prior information of the physical or chemical feature of the sensing object, where the prior information is not a target feature to be sensed; or the prior information is a target feature to be sensed, but a sensing indicator of the prior information is worse than the sensing indicator of the first sensing requirement information. For example, indication information of radar detection is prior information of a feature of a target to be detected, but precision of the indication information is low, and the purpose of radar detection is high-precision detection with the help of low-precision indication information.
(2) Prior information of the target environment: It refers to prior information of the physical or chemical feature of the sensing area. The prior information is not target environment information to be sensed; or the prior information is a target feature to be sensed, but the sensing indicator of the prior information is worse than the sensing indicator of the first sensing requirement information. For example, when performing air humidity detection, prior information of air temperature is needed to determine signal attenuation caused by dry air, so that a more accurate calculation of the signal attenuation caused by water vapor (humidity) in the air can be performed.

The sensing indicator may include at least one of the following: a sensing error, a sensing resolution/sensing precision, a sensing delay, a sensing range, a sensing frequency, a detection probability, a false alarm probability, a sensing signal-to-interference-to-noise ratio, a sensing blind zone requirement, and the like.

The sensing measurement quantity includes at least one of the following:
a first-level measurement quantity that is a measurement quantity to be measured by performing a sensing process;
a second-level measurement quantity that is a measurement quantity obtained by performing first preset processing on the first-level measurement quantity; and
a third-level measurement quantity that is a measurement quantity obtained by performing second preset processing on the first-level measurement quantity and/or the second-level measurement quantity.

In a specific implementation, the first-level measurement quantity refers to a measurement quantity that can be directly obtained by a receiver of the sensing node through processes such as antenna coupling, amplification, down-conversion, filtering, automatic gain control (Automatic Gain Control, AGC), analog or digital (Analog or Digital, AGC) signal sampling, digital down-conversion, and digital filtering, including: complex signals (including I and Q paths), a signal amplitude, a signal phase, signal power, polarization information, and the like, and a threshold detection result, a maximum/minimum value extraction result, and the like of the measurement quantity.

The first preset processing may be simple operation processing. That is, the second-level measurement quantity refers to a measurement quantity that can be directly obtained from the first-level measurement quantity through simple operations (including: addition, subtraction, multiplication and division, matrix addition, subtraction and multiplication, matrix transposition, trigonometric relation operations, square root operations, power operations, and a threshold detection result, a maximum/minimum value extraction result, and the like of the foregoing operation result), including: an amplitude ratio, a phase difference, an angle-of-arrival (Angle-of-Arrival, AOA) of a received signal, an angle of departure (Angle of Departure, AOD) of a transmit signal, delay (distance) information, a distance difference, an angle difference, and the like.

Optionally, the second-level measurement quantity further includes a result of a complex plane rotation operation of received signals I and Q. The complex plane rotation operation formula is I*cos(theta)+Q*sin(theta), where I represents I channel signal time domain sampling data, Q represents the Q channel signal time domain sampling data, and theta is a known angle value.

The second preset processing may be complex operation processing. That is, the third-level measurement quantity refers to a measurement quantity that can be directly obtained from the first-level measurement quantity and/or the second-level measurement quantity after complex operations (including: fast Fourier transform (Fast Fourier Transform, FFT) or inverse fast Fourier transform (Inverse Fast Fourier Transform, IFFT), discrete Fourier transform (Discrete Fourier Transform, DFT) or inverse discrete Fourier transform (Inverse Discrete Fourier Transform, IDFT), two-dimensional fast Fourier transform (2 Dimensional Fast Fourier Transform, 2D-FFT), three-dimensional fast Fourier transform (3 Dimensional Fast Fourier Transform, 3D-FFT), matched filtering, autocorrelation operation, wavelet transform, digital filtering, and the like, and a threshold detection result, a maximum/minimum value extraction result, and the like of the foregoing operation result), including: operation results of the complex signal (or the signal amplitude, or the signal phase) through FFT (or IFFT) or a maximum value data point thereof, a power spectrum or a maximum value data point thereof, Doppler frequency shift (velocity), Doppler spread, a velocity difference, a delay Doppler two-dimensional map or a maximum value data point thereof, a radar one-dimensional imaging map or a maximum value data point thereof, a radar two-dimensional imaging map or a maximum value data point thereof, a synthetic aperture radar (Synthetic Aperture Radar, SAR) imaging map or a maximum value data point thereof, and the like.

It should be noted that in different sensing application scenarios, depending on the sensing target and the sensing method, only the first-level measurement quantity may be required (for example, human/vehicle flow monitoring based on received signal strength (Received Signal Strength, RSS)), or only the first-level measurement quantity and the second-level measurement quantity (for example, radar ranging) are required, or the first-level measurement quantity, the second-level measurement quantity and the third-level measurement quantity (for example, radar imaging) are all required.

In addition, a second sensing measurement quantity obtained by a second sensing node by performing a second sensing process has the same meaning as the first sensing measurement quantity. Details are not described herein again.

In an implementation, after the sensing node measures a respective measurement result, the second-level measurement quantity and/or the third-level measurement quantity may be calculated on the sensing node side. Alternatively, the sensing node may further send the first-level measurement quantity to the sensing function network element or the core network element, to calculate the second-level measurement quantity and/or the third-level measurement quantity according to the first-level measurement quantity on the sensing function network element side or the core network element, or even calculate the second-level measurement quantity and/or the third-level measurement quantity according to the first-level measurement quantity on the application server side.

In applications, each level of measurement quantity may be calculated in the same device according to computing capabilities of devices such as the sensing node that performs the sensing process, the sensing function network element, the core network element, and the application server, and requirements for the sensing indicator, or may be calculated in different devices among the sensing node, the sensing function network element, the core network element, and the application server.

Optionally, the second-level measurement quantity is calculated by a sensing node or a sensing function network element or a core network element according to the first-level measurement quantity; and
the third-level measurement quantity is calculated by the sensing node or the sensing function network element or the core network element according to the first-level measurement quantity and/or the second-level measurement quantity.

### Example 1:

If the sensing node that performs the sensing process has strong computing capabilities (such as a base station), the data amount of the sensing measurement quantity is large (large transmission time overhead), and the sensing requirement has high requirements on a sensing delay, the operation of the second-level measurement quantity and/or the third-level measurement quantity may be completed on the sensing node, and an operation result is sent to the sensing function network element, the core network element, and the application server.

### Example 2:

If the sensing node that performs the sensing process has weak computing capabilities (such as an Internet of Things terminal), the data amount of the sensing measurement quantity is large (large transmission time overhead), and the sensing requirement does not have high requirements on the sensing delay, the operation of the first-level measurement quantity may be completed at the sensing node, and the calculation result is sent to the sensing function network element, the core network element, and the application server. The operation of the second-level measurement quantity and/or the third-level measurement quantity is performed by the sensing function network element, the core network element, and the application server.

### Example 3:

If the data amount of the sensing measurement quantity is small (small transmission time overhead), under the scheduling of the core network element or the application server, the operation of each level of measurement quantity may be completed on at least one side of the sensing node, the sensing function network element, the core network element, and the application server.

Step 202: The first sensing function network element determines a first sensing node and a second sensing node according to the first sensing requirement information, and obtains respective sensing requirement information of the first sensing node and the second sensing node.

In a specific implementation, a sensing node may be a device or device group that can entirely complete a sensing process. That is, a sensing node may include one or at least two devices, and the one or at least two devices may include a network side device and/or a terminal device.

For example, it is assumed that the sensing target in the first sensing requirement information is to measure a distance and a speed of the sensing object. In this case, radar echo detection can be used for sensing, such as spontaneous self-collection by a base station or spontaneous self-collection by UE. In this case, only one device is required to complete the entire sensing process. That is, one node includes one device, and the device includes but is not limited to: a base station, UE, a transmitting receiving point TRP, an access point (Access Point, AP), and a reconfigurable intelligent surface (Reconfigurable Intelligent Surface, RIS) entity.

In another example, it is assumed that the sensing target in the first sensing requirement information is to measure a rainfall rate in the sensing area. In this case, sensing may be performed by using a base station A to send a signal and a base station B to receive the signal and perform signal processing. In other words, in this case, two devices are required to cooperate to complete a sensing process. That is, one node may include two devices, and the devices include but are not limited to: a base station, UE, a TRP, an AP, and a RIS.

In another example, it is assumed that the sensing target in the first sensing requirement information is to determine a position of the sensing object UE. In this case, sensing may be performed in a device-based manner. In addition to the sensing object UE, at least three devices are required to complete three-point positioning. In other words, in this case, a plurality of devices are required to cooperate to complete the sensing process. That is, one node may include a plurality of devices, and the devices include but are not limited to: a base station, UE, a TRP, an AP, and a RIS.

In addition, the first sensing node may be the best sensing node selected according to the first sensing requirement information, which is a sensing node that can maximize satisfaction of the first sensing requirement information, or a sensing node that can meet the first sensing requirement information in specific conditions. Maximizing satisfaction of the first sensing requirement information can also be understood as minimizing a deviation. That is, compared with other sensing nodes, a sensing result with the smallest deviation from the sensing target and the sensing indicator in the first sensing requirement information can be obtained. Therefore, the first sensing node may not be able to independently meet the requirements of the first sensing requirement information, and may require the assistance of other sensing nodes. In this case, the first sensing function network element may further determine the second sensing node to use the second sensing node to assist the first sensing node, to obtain the sensing result that can meet the requirements of the first sensing requirement information.

In an optional implementation, the determining, by the first sensing function network element, a first sensing node according to the first sensing requirement information includes:
determining, by the first sensing function network element, the first sensing node and a type of a target sensing collaboration according to the first sensing requirement information, and sending the first sensing requirement information to the first sensing node; or
determining, by the first sensing function network element, the first sensing node according to the first sensing requirement information, sending the first sensing requirement information to the first sensing node, and receiving the type of the target sensing collaboration from the first sensing node.

Optionally, the type of the target sensing collaboration includes any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

### Option 1

The target collaborative sensing performed by sensing nodes of different sensing types coordinated by a same sensing function network element collaboratively can be understood as: the target sensing is collaboratively implemented between sensing nodes of different sensing types under the coordination of the same sensing function network element. In other words, the first sensing node and the second sensing node are both sensing nodes scheduled by the first sensing function network element, and sensing types of the first sensing node and the second sensing node are different. For example, the first sensing node is used to sense human flow, and the second sensing node is used to sense weather conditions. In this way, the interference of different weather conditions such as rainfall and haze on the human flow sensing process can be eliminated, to improve accuracy of a human flow sensing result.

In a mobile communication sensing network, there may be at least two sensing nodes of different sensing types coordinated by the same sensing function network element. For example, sensing of weather conditions based on RSS and sensing of human/vehicle flow are similar and can be coordinated by the same sensing function network element. In this case, the sensing function network element can coordinate sensing nodes of different sensing types (for example, weather condition sensing and human/vehicle flow sensing) to perform sensing collaboration.

It should be noted that, when it is determined that the type of the target sensing collaboration is collaboration between sensing nodes of different sensing types under the coordination of the same sensing function network element, the sensing requirement information of the first sensing node and the sensing requirement information of the second sensing node are respectively different sensing requirement information.

### Option 2

The target collaborative sensing performed by sensing nodes of a same sensing type coordinated by a same sensing function network element collaboratively can be understood as: the target sensing is collaboratively implemented between sensing nodes of the same sensing types under the coordination of the same sensing function network element. In other words, the first sensing node and the second sensing node are both sensing nodes scheduled by the first sensing function network element, and sensing types of the first sensing node and the second sensing node are the same.

In this implementation, a plurality of nodes implement the same sensing process under the coordination of the same sensing function network element, and can obtain a sensing result with enhanced sensing indicator through data fusion and other processing, thereby improving sensing performance. For example, all radar imaging sensing based on base stations/UEs in a specific area are coordinated by the same sensing function network element. In this way, radar imaging sensing results of the first sensing node and the second sensing node for the same sensing object can be combined to improve precision of radar imaging sensing.

It should be noted that, when it is determined that the type of the target sensing collaboration is collaboration between the same sensing types under the coordination of the same sensing function network element, the sensing requirement information of the first sensing node and the sensing requirement information of the second sensing node are respectively the same sensing requirement information.

### Option 3

The target collaborative sensing performed by different sensing function network elements collaboratively can be understood as: the target sensing is collaboratively implemented between sensing nodes of different sensing types under the coordination of different sensing function network elements. In other words, the first sensing node is scheduled by the first sensing function network element, and the second sensing node is scheduled by the second sensing function network element. In this case, the sensing types of the first sensing node and the second sensing node may be the same or different. However, usually, the sensing types of sensing nodes scheduled by different sensing function network elements are usually different. For example, in a mobile communication sensing network, sensing types with greatly different sensing measurement quantities and/or sensing methods can be controlled by different sensing function network elements. For example, base station/UE-based radar imaging sensing and positioning sensing can be coordinated by different sensing function network elements respectively. For ease of description, in the following embodiment, an example in which the first sensing node and the second sensing node have different sensing types is used, to illustrate a process of collaboratively implementing the target collaborative sensing between different sensing function network elements.

In an implementation, any of the following manners may be used to determine the first sensing node:

### Manner 1:

Capability configuration information of each sensing node may be pre-stored in the network side device. For example, each sensing function network element may pre-store the capability configuration information of each sensing node scheduled by the sensing function network element. In this way, when a sensing function network element obtains a sensing requirement, the sensing function network element can determine, according to the capability configuration information pre-stored by the sensing function network element and/or other network nodes, the first sensing node for performing the first sensing process, and send the first sensing requirement information to the first sensing node.

Optionally, the determining, by the first sensing function network element, a first sensing node according to the first sensing requirement information includes:
determining, by the first sensing function network element, the first sensing node according to the first sensing requirement information and capability configuration information of each sensing node.

In this implementation, the sensing function network element can select, according to the pre-stored capability configuration information of each sensing node, the first sensing node that can be used to perform the first sensing process.

### Manner 2:

The network side device may not pre-store the capability configuration information of the sensing node. In this case, the sensing function network element may initially select a sensing node that performs the first sensing process according to the first sensing requirement information, and send the first sensing requirement information to the sensing node. The sensing node feeds back to the sensing function network element according to the received first sensing requirement information. If the sensing node feeds back to determine to perform the first sensing process, the sensing node is selected as the first sensing node and the selection process is ended. If the sensing node feeds back not to perform the first sensing process, the sensing function network element needs to reselect the first sensing node until a first sensing node that can perform the first sensing process is selected.

Optionally, the determining, by the first sensing function network element, a first sensing node according to the first sensing requirement information includes:
selecting, by the first sensing function network element, a third sensing node according to the first sensing requirement information, and sending the first sensing requirement information to the third sensing node;
receiving, by the first sensing function network element, first feedback information from the third sensing node; and
determining, by the first sensing function network element according to the first feedback information, the third sensing node that supports execution of the first sensing process as the first sensing node.

The third sensing node can be understood as a sensing node that is initially selected, according to the first sensing requirement information, to perform the first sensing process.

In this implementation, the sensing node determines according to own capability configuration information that the sensing node can perform the first sensing process, which avoids the need to pre-store the capability configuration information of each sensing node on the network side device.

Further, after determining the first sensing node, whether the first sensing node requires the collaboration of other sensing nodes may be further determined according to the first sensing requirement information and the capability configuration information of the first sensing node, so that a target sensing result that meets the first sensing requirement information can be obtained.

For example, the sensing function network element or other network nodes store the capability configuration information of each sensing node, and the sensing function network element accesses the capability configuration information data of each sensing node stored in the sensing function network element or other network nodes, to determine, according to the capability configuration information of the first sensing node and the first sensing requirement, whether sensing collaboration is required.

In another example, the sensing function network element and other network nodes do not store the capability configuration information of the sensing node. After the first sensing function network element sends the first sensing requirement information to the first sensing node, the first sensing node determines, according to own capability configuration information and the first sensing requirement information, whether sensing collaboration is required, and reports the information to the first sensing function network element.

It should be noted that, through the foregoing process of determining whether sensing collaboration is required, if it is determined that sensing collaboration is required, the first sensing function network element or the first sensing node can further determine the required target sensing collaboration type, for example, according to whether the sensing type of the second sensing node used to assist the first sensing node is the same as the sensing type of the first sensing node, and whether the sensing function network elements that respectively call the first sensing node and the second sensing node are the same sensing function network elements. This is not specifically limited herein.

In an optional implementation, the determining, by the first sensing function network element, a second sensing node according to the first sensing requirement information includes:

determining, by the first sensing function network element, second sensing requirement information and the second sensing node according to the type of the target sensing collaboration and the first sensing requirement information, and sending the second sensing requirement information to the second sensing node; or

receiving, by the first sensing function network element, the second sensing requirement information from the first sensing node, determining the second sensing node according to the second sensing requirement information and the type of the target sensing collaboration, and sending the second sensing requirement information to the second sensing node.

In some embodiments, the first sensing function network element can determine a collaborative sensing requirement (namely, the second sensing requirement information) according to the capability configuration information of the first sensing node reported by the first sensing node or stored by the sensing function network element or stored by other network nodes, the first sensing requirement information, and the type of the target sensing collaboration (where the target sensing is collaboratively implemented between sensing nodes of different sensing types under the coordination of the same sensing function network element).

Certainly, in another embodiment, the second sensing requirement information may alternatively be determined by the first sensing node. For example, the first sensing node determines, according to own capability configuration information and the first sensing requirement information, what kind of assistance needs to be provided by other sensing nodes, thereby determining that the second sensing requirement information is required assistance information. In this case, the sensing function network element can receive the second sensing requirement information from the first sensing node, and select the second sensing node correspondingly.

It should be noted that the foregoing process of the sensing function network element selecting the second sensing node according to the second sensing requirement information may be similar to the foregoing process of the first sensing function network element determining the first sensing node according to the first sensing requirement information. For example, the sensing function network element or other network nodes store the capability configuration information of each sensing node, the sensing function network element accesses capability configuration information data of each sensing node stored in the sensing function network element or other network nodes. The sensing function network element selects, according to the stored capability configuration information and the second sensing requirement information, the second sensing node that performs the collaborative sensing process (namely, the second sensing process), and sends the second sensing requirement information to the second sensing node. Alternatively, the sensing function network element or other network nodes do not store the capability configuration information of the sensing node. The sensing function network element initially selects, according to the second sensing requirement information, the second sensing node that performs the second sensing process, and sends the second sensing requirement information to the second sensing node. The second sensing node feeds back to the sensing function network element: if the second sensing node feeds back to determine to perform the second sensing process, the selection process ends; and if the second sensing node feeds back not to perform the second sensing process, the sensing function network element reselects a second sensing node. The process of determining the second sensing node by the sensing function network element is not elaborated herein.

It is worth noting that, when the target collaborative sensing type is the target collaborative sensing performed by different sensing function network elements collaboratively, coordination can be performed by the core network element.

In an optional implementation, the second sensing node is scheduled by the second sensing function network element, the method further includes:
sending, by the first sensing function network element, the second sensing requirement information to the core network element, where the second sensing requirement information is used for determining the second sensing function network element and the second sensing node.

In an implementation, that the second sensing requirement information is used for determining the second sensing function network element and the second sensing node can be understood as: when receiving the second sensing requirement information, the core network element may determine the second sensing function network element and the second sensing node according to the second sensing requirement information. Alternatively, the core network element is configured to determine the second sensing function network element according to the second sensing requirement information, and the second sensing function network element determines the second sensing node according to the second sensing requirement information.

Specifically, the core network element may select the second sensing function network element and the corresponding second sensing node according to the second sensing requirement information, or the core network element may select the second sensing function network element only according to the second sensing requirement information, and the second sensing node is selected by the second sensing function network element.

Optionally, the selection process of the second sensing function network element may be either of the following two manners:

Manner 1: The core network element or other network nodes store the sensing service type supported by each sensing function network element. The core network element accesses sensing service type data supported by each sensing function network element stored by the core network element or other network nodes. The core network element selects, according to the stored sensing service type information and the second sensing requirement information, the second sensing function network element that performs the collaborative sensing process, and sends the second sensing requirement information to the second sensing function network element.

Manner 2: The core network element and other network nodes do not store the sensing service type supported by each sensing function network element. The core network element initially selects the second sensing function network element according to the second sensing requirement information, and sends the second sensing requirement information to the second sensing function network element. The second sensing function network element feeds back to the core network element: if the second sensing function network element supports the sensing service type indicated by the second sensing requirement information, it is determined to perform the second sensing process, and the second sensing function network element selection process ends; and if the second sensing function network element does not support the sensing service type indicated by the second sensing requirement information, feedback that the second sensing process cannot be performed is provided, and the core network element selects another sensing function network element.

In this implementation, the target collaborative sensing performed by different sensing function network elements collaboratively can be coordinated by the core network element.

Optionally, the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

In an implementation, when the type of the target sensing collaboration is the target collaborative sensing performed by sensing nodes of different sensing types coordinated by a same sensing function network element collaboratively or the target collaborative sensing performed by different sensing function network elements collaboratively, the sensing types of the first sensing node and the second sensing node may be different.

When the type of the target sensing collaboration is the target collaborative sensing performed by sensing nodes of a same sensing type coordinated by a same sensing function network element collaboratively, the sensing types of the first sensing node and the second sensing node may be the same.

In addition, the reference station may include at least one of the following:
(1) A site equipped with conventional measurement tools, such as rain gauges, thermometers, hygrometers, infrared human flow sensing equipment, and special Doppler speed measurement equipment. The site sends a measured reference sensing result to the first sensing node or the sensing function network element through wireless or wired communication, to correct a deviation of a wireless sensing result of the first sensing node.
(2) A site with a known sensing result, such as a reference station with known accurate longitude and latitude high coordinates. The first sensing node performs position sensing on the site to determine and correct a deviation of the wireless sensing result of the first sensing node. In this case, the first sensing node and the site together form a reference station, that is, the second sensing node. In another example, a sensing node within a specific distance (such as one hundred meters) from a weather observation station can be used as a reference station for weather sensing.
(3) A wireless sensing node equipped with conventional measurement tools, such as weather sensing nodes equipped with rain gauges, thermometers, hygrometers, and the like. Some intermediate variables used by the wireless sensing node to perform sensing result operations are measured by the conventional measurement tools equipped, so that the sensing indicator of the sensing result of the wireless sensing node is enhanced and the wireless sensing node can serve as a reference station.

In some other optional implementations, the second sensing node may alternatively be a wireless sensing node similar to the first sensing node, but configuration parameters of the two are slightly different, resulting in different sensing capabilities, which may specifically include at least one of the following cases:
Case 1: The second sensing node and the first sensing node are located at different positions, thereby receiving different interference factors.

For example, the second sensing node is a macro base station tens of meters above the ground, so that the second sensing node is not affected by pedestrian/vehicle crossing and other factors, and is only affected by weather conditions, and can detect weather conditions; while the first sensing node is a micro base station close to the ground and close to a height of a pedestrian/vehicle and can detect pedestrians/vehicles, and is also affected by weather conditions.

Case 2: The second sensing node and the first sensing node have different hardware configurations, thereby having different signal related configurations. The signal related configurations include: frequency band, polarization, bandwidth, transmission power, and the like.

For example, the second sensing node is a device in an FR2 frequency band, which significantly affected by weather conditions, and is suitable for weather sensing; while the first sensing node is an FR1 frequency band device, which is not significantly affected by weather conditions but is significantly affected by pedestrian/vehicle occlusion.

Case 3: The second sensing node and the first sensing node have different workloads, thereby having different amounts of resources (time, bandwidth, and the like.) to be used for sensing.

For example, the first sensing node is located in an area with high human flow density and has less time and bandwidth resources that can be allocated to sensing; while the second sensing node is located in an area with low human flow density and can allocate more time and bandwidth resources to sensing.

Case 4: The second sensing node and the first sensing node are the same entity, but need to perform different sensing processes; and the same entity serves as the second sensing node when performing the second sensing process, and serves as the first sensing node when performing the first sensing process.

It should be noted that the second sensing requirement information is similar to the first sensing requirement information, and may also include: at least one of a sensing target, sensing target prior information, a sensing indicator, and a sensing measurement quantity. Details are not described herein again.

In addition, in a specific implementation, the specific content of the second sensing requirement information and the specific content of the first sensing requirement information may be the same or different; and in a case that the second sensing node assists the first sensing node to implement the target sensing, the specific content of the second sensing requirement information and the specific content of the first sensing requirement information are usually not exactly the same.

Moreover, the main feature of the second sensing node is to perform the second sensing process according to the second sensing requirement information. In some cases, the second sensing node and the first sensing node may be the same entity. In this case, the first sensing node performs the second sensing process to assist the first sensing process of the first sensing node. For ease of description, in this case, the first sensing node that performs the second sensing process is referred to as the second sensing node, and the first sensing node that performs the first sensing process is referred to as the first sensing node.

It should be noted that when a sensing node can meet a sensing requirement, the first sensing function network element can also select a sensing node to perform the corresponding sensing process to obtain a sensing result that meets the sensing requirement. This is not elaborated herein.

In addition, the second sensing node may be one sensing node or at least two sensing nodes. Even the second sensing node may require assistance from other sensing nodes to obtain a sensing result that meets the requirement information of the second sensing node. The sensing result that meets the requirement information of the second sensing node is then used to assist the first sensing node to obtain a target sensing result.

For example, according to the capability configuration information reported by the first sensing node and the second sensing node, or according to the capability configuration information of the first sensing node and the second sensing node stored in the sensing function network element or other network nodes, and the sensing requirement information of each sensing node, the sensing function network element determines whether a third sensing node is needed for sensing collaboration (for example, determines whether the third sensing node is needed for collaboration through a sensing indicator). If the collaboration of the third sensing node is not required, the node selection process ends. If the collaboration of the third sensing node is required, the sensing node selection process of the previous step is repeated until sensing indicators of all auxiliary sensing nodes (such as the second sensing node and the third sensing node, even a fourth sensing node) selected meet the sensing requirement.

In an implementation, a quantity of required auxiliary nodes may be determined by the sensing function network element or the first sensing node. For ease of description, in the following embodiment, one or at least two second sensing nodes and other sensing nodes for assisting the second sensing node are collectively referred to as the second sensing node.

Step 203: The first sensing function network element obtains a target sensing result, where the target sensing result is determined according to results of target collaborative sensing performed by the first sensing node and the second sensing node respectively according to respective sensing requirement information.

In an implementation, the first sensing node may perform a first sensing process according to first sensing requirement information to obtain a first measurement quantity; and the second sensing node may perform a second sensing process according to second sensing requirement information to obtain a second measurement quantity and/or a second sensing result. The target sensing result may then be calculated by at least one of the first sensing node, the first sensing function network element, and the core network element according to the first measurement quantity, and the second measurement quantity and/or the second sensing result. That is, the manner in which the first sensing function network element obtains the target sensing result may be: obtained from the first sensing node, obtained from the core network element, or calculated by the first sensing function network element. This is not specifically limited herein.

In a first optional implementation, the obtaining, by the first sensing function network element, a target sensing result includes:
obtaining, by the first sensing function network element, a first measurement quantity and/or a first sensing result measured by the first sensing node by performing a first sensing process;
obtaining, by the first sensing function network element, a second measurement quantity and/or a second sensing result measured by the second sensing node by performing a second sensing process, where the target collaborative sensing includes the first sensing process and the second sensing process; and
determining, by the first sensing function network element, the target sensing result corresponding to the first sensing requirement information according to the first measurement quantity and/or the first sensing result, and the second measurement quantity and/or the second sensing result.

In this implementation, the first sensing function network element receives the first measurement quantity and/or the first sensing result, and the second measurement quantity and/or the second sensing result from the first sensing node and the second sensing node respectively, and performs a process of calculating the target sensing result correspondingly.

In a second optional implementation, the obtaining, by the first sensing function network element, a target sensing result includes:
obtaining, by the first sensing function network element, a first measurement quantity and/or a first sensing result measured by the first sensing node by performing a first sensing process;
obtaining, by the first sensing function network element, a second measurement quantity and/or a second sensing result measured by the second sensing node by performing a second sensing process, where the target collaborative sensing includes the first sensing process and the second sensing process; and
sending, by the first sensing function network element, the first measurement quantity and/or the first sensing result, and the second measurement quantity and/or the second sensing result to a core network element, and receiving the target sensing result corresponding to the first sensing requirement information from the core network element.

In this implementation, the first sensing function network element receives the first measurement quantity and/or the first sensing result, and the second measurement quantity and/or the second sensing result from the first sensing node and the second sensing node respectively and sends the first measurement quantity and/or the first sensing result, and the second measurement quantity and/or the second sensing result to the core network element, so that the core network element performs the process of calculating the target sensing result according to the first measurement quantity and/or the first sensing result, and the second measurement quantity and/or the second sensing result. In this way, the first sensing function network element does not need to perform the foregoing calculation process, but only obtains the calculated target sensing result from the core network element.

In a third optional implementation, the obtaining, by the first sensing function network element, a target sensing result includes:
obtaining, by the first sensing function network element, the second measurement quantity and/or the second sensing result measured by the second sensing node by performing the second sensing process, and sending the second measurement quantity and/or the second sensing result to the first sensing node; and
receiving, by the first sensing function network element, the target sensing result corresponding to the first sensing requirement information from the first sensing node.

In this implementation, the second measurement quantity and/or the second sensing result of the second sensing node is forwarded to the first sensing node through the first sensing function network element, so that the process of calculating the target sensing result according to the second measurement quantity and/or the second sensing result, and the first measurement quantity is performed through the first sensing node.

In practical applications, according to the computing capabilities of the first sensing node, the sensing function network element and the core network element, the first measurement quantity, a data amount of the second measurement quantity and/or the second sensing result, and the like, it is determined that the process of calculating the target sensing result is performed by the first sensing node, the sensing function network element and the core network element.

For ease of description, the process of calculating the target sensing result of the first sensing node is illustrated through the following embodiments:

### Embodiment 1

The second sensing node sends the second sensing result obtained by performing the second sensing process to the first sensing node, and the first sensing node calculates the target sensing result according to the first sensing measurement quantity (which may be a first-level measurement quantity and/or a second-level measurement quantity and/or a third-level measurement quantity) obtained by performing the first sensing process and the second sensing result, and reports the target sensing result to the sensing function network element.

In a specific implementation, the second sensing node may perform the second sensing process to obtain a second sensing measurement quantity, and calculate the second sensing result according to the second sensing measurement quantity.

### Embodiment 2

The second sensing node sends the second sensing measurement quantity (the first-level measurement quantity and/or the second-level measurement quantity and/or the third-level measurement quantity) obtained by performing the second sensing process to the first sensing node, and the first sensing node calculates the target sensing result according to the first sensing measurement quantity (the first-level measurement quantity and/or the second-level measurement quantity and/or the third-level measurement quantity) obtained by performing the first sensing process and the second sensing measurement quantity, and reports the target sensing result to the sensing function network element.

### Embodiment 3

The first sensing node sends the first sensing measurement quantity (the first-level measurement quantity and/or the second-level measurement quantity and/or the third-level measurement quantity) obtained by performing the first sensing process to the sensing function network element, and the second sensing node sends the second sensing measurement quantity (the first-level measurement quantity and/or the second-level measurement quantity and/or the third-level measurement quantity) obtained by performing the second sensing process to the sensing function network element. The sensing function network element calculates the target sensing result according to the first sensing measurement quantity and the second sensing measurement quantity.

### Embodiment 4

The first sensing node sends the first sensing measurement quantity (the first-level measurement quantity and/or the second-level measurement quantity and/or the third-level measurement quantity) obtained by performing the first sensing process to the sensing function network element, and the second sensing node sends the second sensing result obtained by performing the second sensing process to the sensing function network element. The sensing function network element calculates the target sensing result according to the first sensing measurement quantity and the second sensing result.

It should be noted that after obtaining the target sensing result, the target sensing result may be sent to a third-party application or a terminal through the core network element.

In an implementation, when the type of the target sensing collaboration is the target collaborative sensing performed by different sensing function network elements collaboratively, the sensing function network element may further forward the first sensing measurement quantity and/or the first sensing result, and the second sensing measurement quantity and/or the second sensing result to the core network element, so that the target sensing result is calculated by the core network element. For example, the first sensing node sends the first sensing measurement quantity (the first-level measurement quantity and/or the second-level measurement quantity and/or the third-level measurement quantity) and/or the first sensing result obtained by performing the first sensing process to the core network element through the first sensing function network element. The second sensing node sends the second sensing measurement quantity (the first-level measurement quantity and/or the second-level measurement quantity and/or the third-level measurement quantity) and/or the second sensing result obtained by performing the second sensing process to the core network element through the second sensing function network element. The core network element calculates the target sensing result required by the third-party application or UE according to the first sensing measurement quantity and/or the first sensing result, and the second sensing measurement quantity and/or the second sensing result.

It should be noted that the data exchange process among the first sensing node, the second sensing node, the first sensing function network element, the second sensing function network element and the core network element may be direct communication or indirect communication. For example, in a case that the first sensing node is scheduled by the first sensing function network element, and the second sensing node is scheduled by the second sensing function network element, the second sensing node may send the second sensing measurement quantity and/or the second sensing result sent to the first sensing node through the second sensing function network element, the core network element, and the first sensing function network element in sequence, so that the second sensing node sends data to the first sensing node. The data exchange process among the first sensing node, the second sensing node, the first sensing function network element, the second sensing function network element and the core network element is not specifically limited herein.

The types of the first sensing process and the second sensing process may respectively include at least one of the following:
(1) Spontaneous self-collection: It is suitable for situations where one sensing node includes only one device, for example, spontaneous self-collection by a radar measures a distance, a speed, and an angle of a target object or measures weather conditions in a target area.
(2) One device sends signals and another device receives signals: It is suitable for situations where one sensing node includes two devices. For example, in a human/vehicle flow monitoring example, a crossing process of pedestrians/vehicles is monitored according to a case of fading received signal strength of a second device when a pedestrian/vehicle crosses a link formed by a first device and the second device.
(3) One device sends signals and a plurality of devices receive signals: It is suitable for situations where one sensing node includes a plurality of devices. For example, in a weather condition detection example, a device in the center of the sensing area sends signals to the surroundings through beam scanning. The signals are received by a plurality of devices at other positions respectively. Through received signal strength calculation of the plurality of devices, combined with algorithms such as tomographic reconstruction (tomographic reconstruction), distribution of weather conditions (such as a rainfall rate) in the sensing area can be obtained.

Certainly, in an implementation, one device may receive signals, and a plurality of devices may send signals. The principle is similar to the foregoing situation where one device sends signals, and a plurality of devices receive signals. This is not elaborated herein.

According to the requirement relationship between the first sensing process and the second sensing process, the second sensing process may be performed first and then the first sensing process, or the execution order of the first sensing process and the second sensing process is not limited.

The situation where the second sensing process is performed first and then the first sensing process is suitable for a case in which some configuration parameters (or some parameters of the first sensing signal related configuration) of a first sensing signal (referring to a signal sent by performing the first sensing process) are determined depending on the second sensing result (referring to a sensing result obtained by performing the second sensing process) or the second sensing measurement quantity.

The situation where the execution order of the first sensing process and the second sensing process is not limited is suitable for a case in which the configuration parameters of the first sensing signal do not depend on the second sensing result or the second sensing measurement quantity. Therefore, the first sensing process and the second sensing process may be performed simultaneously; or the first sensing process may be performed first, and then the second sensing process may be performed; or the second sensing process may be performed first, and then the first sensing process may be performed.

It should be noted that in this implementation, although the execution order of the first sensing process and the second sensing process is not limited, the calculation of the target sensing result still depends on the second sensing result or the second sensing measurement quantity.

In an optional implementation, after the sending, by the first sensing function network element, the first sensing requirement information to the first sensing node, the method further includes:

determining, by the first sensing function network element, first sensing signal related configuration information according to the first sensing requirement information and capability configuration information of the first sensing node, and sending the first sensing signal related configuration information to the first sensing node; or receiving, by the first sensing function network element, the first sensing signal related configuration information from the first sensing node, where the first sensing signal related configuration information is used for configuring a first signal for the first sensing node to perform the first sensing process.

The first sensing signal related configuration information may include at least one of the following:
waveform, which may specifically include: a radar signal waveform, a communication radar integrated signal waveform, and other sensing signal waveforms, such as orthogonal frequency division multiplex (Orthogonal frequency division multiplex, OFDM), discrete Fourier transform-spread OFDM (Discrete Fourier Transform-Spread OFDM, DFT-s-OFDM), frequency modulated continuous wave (Frequency Modulated Continuous Wave, FMCW), a linear frequency modulated (Linear Frequency Modulated, LFM) (or referred to as chirp (chirp)) waveform, and the like;
orthogonal frequency division multiplexing OFDM subcarrier spacing, such as 15 kHz, 30 kHz, 60 kHz, 120 kHz, or 240 kHz only used in NR;
bandwidth, where this parameter affects a ranging resolution and other performance of radar detection;
frequency, which may be a frequency at the center of a sensing signal bandwidth, and may specifically be an absolute value of the frequency, or an offset value of a frequency relative to a frequency reference point (such as a point A), or the like;
duty cycle, which is a ratio between a length of an emitted pulse and a pulse period when using a pulse waveform, where this parameter affects a blind range and other performance of radar detection;
beam width, where in an implementation, the narrower the beam width, the better the angle measurement precision;
beam direction, which is used to align a direction of a sending/receiving signal of a sensing node to a sensing object or sensing area, and can be achieved by selecting an antenna module or setting a phase shift value of each module of the array antenna;
polarization parameter, which may be vertical polarization, horizontal polarization, circular polarization, elliptical polarization and other polarization type parameters;

Power, where in an implementation, power of a first signal can affect a sensing coverage and anti-noise performance, and interference to other systems needs to be considered; and
signal processing cycle, where in an implementation, a receiver performs signal processing according to the cycle, which can affect a speed resolution and other performance of a radar.

In a first optional implementation, the first sensing function network element may determine the first sensing signal related configuration information according to the first sensing requirement information and the capability configuration information of the first sensing node.

For example, the sensing function network element determines the first sensing signal related configuration information according to the first sensing requirement information and the capability configuration information of the first sensing node, and sends the information to the first sensing node. The capability configuration information of the first sensing node may be stored by the sensing function network element or other network nodes, or may be reported by the first sensing node. This is not specifically limited herein.

In this implementation, the sensing function network element may determine, according to the capability configuration information of the sensing node and the first sensing requirement information, the first sensing signal related configuration information of the first signal required by the first sensing node to perform the first sensing process.

In a second optional implementation, the first sensing signal related configuration information may alternatively be determined by the first sensing node. For example, the first sensing node determines the first sensing signal related configuration information according to own capability configuration information and the first sensing requirement information.

In an optional implementation, after the sending, by the first sensing function network element, the second sensing requirement information to the second sensing node, the method further includes:
determining, by the first sensing function network element, second sensing signal related configuration information according to the second sensing requirement information and capability configuration information of the second sensing node, and sending the second sensing signal related configuration information to the second sensing node; or receiving, by the first sensing function network element, the second sensing signal related configuration information from the second sensing node, where the second sensing signal related configuration information is used for configuring a second signal for the second sensing node to perform the second sensing process.

In this implementation, the process of determining the second sensing signal related configuration information is similar to the process of determining the first sensing signal related configuration. For example, the second sensing signal related configuration information may be determined by the sensing function network element or determined by the second sensing node. Details are not described herein again.

It should be noted that in practical applications, the second sensing signal related configuration information may alternatively be configuration information recommended by the first sensing node. For example, the first sensing node determines the first signal related configuration information, and the first sensing node provides a recommended value of the second sensing signal related configuration information and sends the value to the second sensing node. The second sensing node then determines the second sensing signal related configuration information according to the recommended value of the second sensing signal related configuration information.

To facilitate understanding of the wireless sensing collaboration method provided in embodiments of this application, the following three application scenarios are used as examples to illustrate the wireless sensing collaboration method provided in this application:

### Scenario 1

In a human/vehicle flow sensing application scenario, the sensing target in the first sensing requirement information is human/vehicle flow. In this case, the first sensing node includes two devices (the first device and the second device). The first device sends a signal and the second device receives the signal. The second device determines whether a human/vehicle crosses a link (such as a line of sight (Line of Sight, LOS) path) formed by the first device and the second device by detecting received signal strength (power). The sensing measurement quantity in the first sensing requirement information is signal strength, and the first sensing signal related configuration includes signal frequency, transmission power, and the like.

In this scenario, when no human/vehicle crosses, baseline (Baseline) of a signal received by the second device of the first sensing node also changes with the weather conditions (including rain, snow, fog, humidity, and the like), so that it is impossible to distinguish whether the change in the received signal strength of the second device of the first sensing node is due to the crossing of human/vehicle or weather changes. Therefore, the Baseline needs to be calibrated in real time, and the first sensing node cannot calibrate the Baseline independently. Therefore, sensing collaboration is required to meet the requirements of the first sensing requirement information.

In this regard, a feasible baseline calibration method is to introduce a second sensing node to perform collaborative sensing. The target collaborative sensing type in this case may be the target collaborative sensing performed by sensing nodes of different sensing types coordinated by a same sensing function network element collaboratively, that is, the first sensing node and the second sensing node are scheduled by the same sensing function network element; or the target collaborative sensing performed by different sensing function network elements collaboratively, that is, the first sensing node and the second sensing node are scheduled by different sensing function network elements. Through the wireless sensing collaboration method provided in this application, the second sensing node is used to detect changes in the Baseline caused by changes in weather conditions to achieve calibration; and the second sensing node then sends calibration information to the first sensing node. The first sensing node performs human/vehicle flow sensing according to a Baseline calibration result of the second sensing node. The sensing target in the second sensing requirement information corresponding to the second sensing node is weather conditions, and the sensing measurement quantity is the received signal strength.

### Scenario 2

In a radar imaging scenario, the sensing target in the sensing requirement information (including the first sensing requirement information and the second sensing requirement information) is radar two-dimensional imaging of the target area. The sensing measurement quantities in the sensing requirement information (including the first sensing requirement information and the second sensing requirement information) are complex signals, complex signal FFT operation results, and the like. The sensing signal related configuration corresponding to the sensing requirement information (including the first sensing requirement information and the second sensing requirement information) mainly includes a signal bandwidth, a signal beam width, and the like.

In an implementation, due to a limited size of an antenna array of a single device, an angular domain resolution of radar detection is limited, so that a resolution of radar imaging is poor and cannot meet sensing indicators of sensing requirements. Through the wireless sensing collaboration method provided in this application, a plurality of sensing nodes can sense collaboratively, and a plurality of sensing nodes implement the same sensing process.

According to sensing indicators of sensing requirements of the third-party application or UE, the sensing function network element selects a plurality of sensing nodes to perform collaborative sensing imaging to achieve an effect of synthetic aperture imaging, and performs fusion data processing on sensing results obtained by the plurality of sensing nodes to obtain high-resolution radar imaging results.

In this application scenario, the target collaborative sensing type may be the target collaborative sensing performed by sensing nodes of a same sensing type coordinated by a same sensing function network element collaboratively.

### Scenario 3

In a scenario of rainfall rate distribution detection in weather condition detection, the sensing target in the sensing requirement information (including the first sensing requirement information and the second sensing requirement information) is the rainfall rate distribution in the target area, and the sensing measurement quantity is signal strength. The sensing signal related configuration in the sensing requirement information (including the first sensing requirement information and the second sensing requirement information) mainly includes signal power, a frequency, and the like. Rainfall rate detection uses a manner of the first device sending a signal and the second device receiving the signal. The second device calculates the rainfall rate by detecting attenuation of a received signal by using an ITU standard rainfall model.

Because one node (including two devices: the first device and the second device) can only detect an average rainfall rate on the link between the two devices, the rainfall rate distribution in the target area cannot be obtained, other sensing nodes need to be introduced for sensing collaboration, and a plurality of nodes implement the same sensing process.

According to spatial resolution requirements of rainfall rate distribution in the sensing requirements, the sensing function network element determines a quantity of sensing nodes that need to be coordinated (where one node may include two or more devices). Rainfall rate detection results of the plurality of nodes are calculated through tomographic reconstruction and other algorithm operations to obtain the rainfall rate distribution in the target area.

In this application scenario, the target collaborative sensing type may be the target collaborative sensing performed by sensing nodes of a same sensing type coordinated by a same sensing function network element collaboratively.

In this embodiment of this application, the first sensing function network element obtains first sensing requirement information; the first sensing function network element determines a first sensing node and a second sensing node according to the first sensing requirement information, and obtains respective sensing requirement information of the first sensing node and the second sensing node; and the first sensing function network element obtains a target sensing result, where the target sensing result is determined according to results of target collaborative sensing performed by the first sensing node and the second sensing node respectively according to respective sensing requirement information. In this way, when one sensing node cannot meet the first sensing requirement information, at least two sensing nodes can be selected and requirement information of each sensing node is determined, to perform target collaborative sensing through the at least two sensing nodes respectively according to respective sensing requirement information, so that a target sensing result that meets the first sensing requirement information can be obtained, thereby improving the sensing performance.

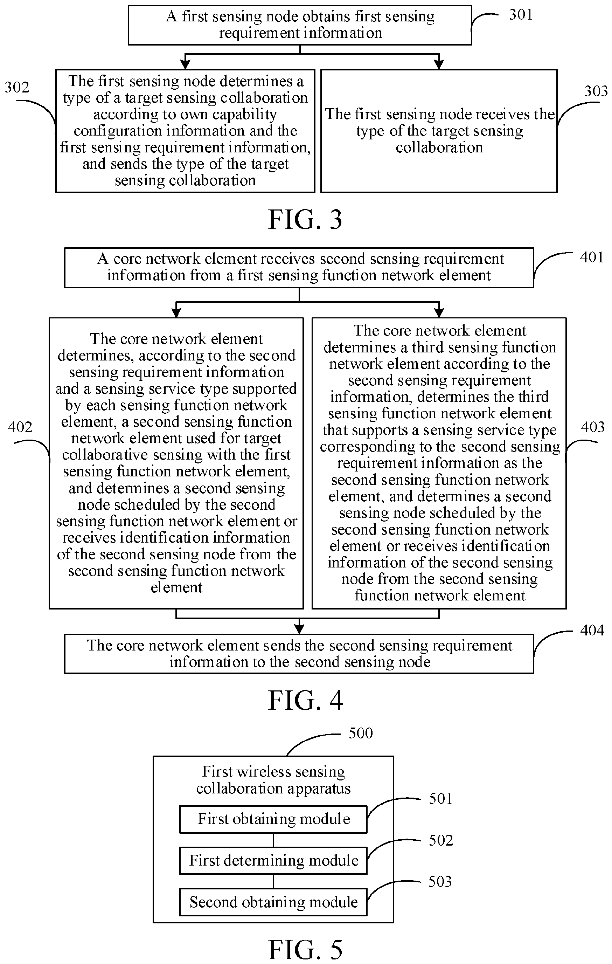

Refer to FIG. 3. A second wireless sensing collaboration method provided in an embodiment of this application may include the following steps:
Step 301: A first sensing node obtains first sensing requirement information.
Step 302: The first sensing node determines a type of a target sensing collaboration according to own capability configuration information and the first sensing requirement information, and sends the type of the target sensing collaboration.
Step 303: The first sensing node receives the type of the target sensing collaboration.

It should be noted that in a specific implementation, the first sensing node may perform only one of step 302 and step 303. The method flowchart shown in FIG. 3 is only an example and does not constitute a specific limitation herein.

In addition, a difference between this embodiment of this application and the method embodiment shown in FIG. 2 is that: the execution body of the method embodiment shown in FIG. 2 is the first sensing function network element, while the execution body of the method embodiment shown in FIG. 3 is the first sensing node.

In an implementation, that the first sensing node obtains the first sensing requirement information may be specifically: the first sensing node receives the first sensing requirement information from the first sensing function network element.

In an optional implementation, the process of determining, by the first sensing node, the type of the target sensing collaboration according to own capability configuration information and the first sensing requirement information corresponds to the implementation solution in the method embodiment shown in FIG. 2 in which the first sensing function network element sends the first sensing requirement information to an initially selected sensing node, determines the first sensing node for performing the first sensing process according to the first feedback from the sensing node, and receives the type of the target sensing collaboration from the first sensing node, and has the same beneficial effects. Details are not described herein again.

That the first sensing node sends the type of the target sensing collaboration may be that the first sensing node sends the type of the target sensing collaboration to the first sensing function network element, so that the first sensing function network element selects the second sensing node according to the type of the target sensing collaboration and the first sensing requirement information.

In another optional implementation, the first sensing node receives the type of the target sensing collaboration. Specifically, the first sensing node receives the type of the target sensing collaboration from the first sensing function network element. In addition, the implementation in which the first sensing node receives the type of the target sensing collaboration from the first sensing function network element corresponds to the implementation solution in the method embodiment shown in FIG. 2 in which the first sensing function network element or another network side node pre-stores the capability configuration information of each sensing node, selects, according to the first sensing requirement information and the capability configuration information of each sensing node, the first sensing node that can be used to perform the first sensing process, and determines the type of the target sensing collaboration, and has the same beneficial effects. Details are not described herein again.

Optionally, after the sending or receiving, by the first sensing node, the type of the target sensing collaboration, the method further includes:
performing, by the first sensing node, a first sensing process to measure a first sensing measurement quantity;
obtaining, by the first sensing node, a second sensing measurement quantity measured by a second sensing node or obtaining a second sensing result calculated by the second sensing node according to the second sensing measurement quantity; and
calculating, by the first sensing node, a target sensing result according to the first sensing measurement quantity and the second sensing measurement quantity and/or the second sensing result.

This implementation corresponds to the implementation solution in the method embodiment shown in FIG. 2 in which the first sensing node calculates the target sensing result according to the first sensing measurement quantity, the second sensing measurement quantity and/or the second sensing result, and has the same beneficial effects. Details are not described herein again.

Optionally, after the sending or receiving, by the first sensing node, the type of the target sensing collaboration, the method further includes:
performing, by the first sensing node, a first sensing process to measure a first sensing measurement quantity and/or a first sensing result, and sending the first sensing measurement quantity and/or the first sensing result to the first sensing function network element.

This implementation corresponds to the implementation solution in the method embodiment shown in FIG. 2 in which the first sensing function network element calculates the target sensing result according to the first sensing measurement quantity and/or the first sensing result, and the second sensing measurement quantity and/or the second sensing result, or the first sensing function network element forwards the received first sensing measurement quantity and/or the first sensing result, and the second sensing measurement quantity and/or the second sensing result to the core network element, and the core network element calculates the target sensing result correspondingly, and has the same beneficial effects. Details are not described herein again.

Optionally, after the determining, by the first sensing node, a type of a target sensing collaboration according to own capability configuration information and the first sensing requirement information, the method further includes:
determining, by the first sensing node, own first signal related configuration information according to own capability configuration information and the first sensing requirement information;
   or
determining, by the first sensing node, own first signal related configuration information according to own capability configuration information and the first sensing requirement information, determining a recommended value of second signal related configuration information of a second sensing node, and sending the recommended value of the second signal related configuration information.

This implementation corresponds to the implementation in the method embodiment shown in FIG. 2 in which the sensing node determines own signal related configuration information, or the first sensing node determines recommended values of own signal related configuration information and signal related configuration information of other sensing nodes, and has the same beneficial effects. Details are not described herein again.

Optionally, the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

Optionally, the type of the target sensing collaboration includes any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

The process in the second wireless sensing collaboration method provided in this embodiment of this application corresponds to the process performed by the first sensing node in the method embodiment shown in FIG. 2, and has the same beneficial effects. Details are not described herein again.

Refer to FIG. 4. A third wireless sensing collaboration method provided in an embodiment of this application may include the following steps:

Step 401: A core network element receives second sensing requirement information from a first sensing function network element.

Step 402: The core network element determines, according to the second sensing requirement information and a sensing service type supported by each sensing function network element, a second sensing function network element used for target collaborative sensing with the first sensing function network element, and determines a second sensing node scheduled by the second sensing function network element or receives identification information of the second sensing node from the second sensing function network element.

Step 403: The core network element determines a third sensing function network element according to the second sensing requirement information, determines the third sensing function network element that supports a sensing service type corresponding to the second sensing requirement information as the second sensing function network element, and determines a second sensing node scheduled by the second sensing function network element or receives identification information of the second sensing node from the second sensing function network element.

Step 404: The core network element sends the second sensing requirement information to the second sensing node.

It should be noted that, a difference between this embodiment of this application and the method embodiment shown in FIG. 2 is that: the execution body of the method embodiment shown in FIG. 2 is the first sensing function network element, while the execution body of the method embodiment shown in FIG. 4 is the core network element. In addition, the method embodiment shown in FIG. 4 is specifically applied to a scenario where the type of the target sensing collaboration is: the target collaborative sensing performed by different sensing function network elements collaboratively.

In an implementation, the second sensing requirement information from the first sensing function network element received by the core network element may be determined by the first sensing function network element, or may be determined by the first sensing node selected by the first sensing function network element to perform the first sensing process, and the specific meaning of the second sensing requirement information is the same as that of the second sensing requirement information in the method embodiment shown in FIG. 2. Details are not described herein again.

It should be noted that in an implementation, only one of the steps 402 and 403 may be performed, and the method flow shown in FIG. 4 is only used as an example. For example, in a case that the core network element or another network node pre-stores the sensing service type supported by each sensing function network element, step 402 can be performed, so that the core network element selects the second sensing function network element according to the second sensing requirement information and the pre-stored sensing service type supported by each sensing function network element.

In a case that the core network element or another network node does not pre-store the sensing service type supported by each sensing function network element, step 403 can be performed, so that the core network element initially selects the second sensing function network element according to the second sensing requirement information directly, and sends the second sensing requirement information to the second sensing function network element. The second sensing function network element feeds back to the core network element: if the second sensing function network element supports the sensing service type indicated by the second sensing requirement information, it is determined to perform the second sensing process, and the second sensing function network element selection process ends; and if the second sensing function network element does not support the sensing service type indicated by the second sensing requirement information, feedback that the second sensing process cannot be performed is provided, and the core network element selects another sensing function network element as the second sensing function network element.

In addition, when the core network element determines the second sensing function network element, the second sensing function network element may select the second sensing node according to the second sensing requirement information, and report the selected second sensing node to the core network element; or the core network element selects, according to the second sensing requirement information, the second sensing node from sensing nodes scheduled by the second sensing function network element. The determination process of the second sensing node is similar to the process of determining the second sensing node in the method embodiment shown in FIG. 2. Details are not described herein again.

Correspondingly, that the core network element sends the second sensing requirement information to the second sensing node may be understood as: the core network element sends the second sensing requirement information to the second sensing function network element, and the second sensing function network element forwards the received second sensing requirement information to the second sensing node.

Optionally, after the receiving, by the core network element, second sensing requirement information from a first sensing function network element, the method further includes:
obtaining, by the core network element, first sensing requirement information; and
determining, by the core network element, the first sensing function network element according to the first sensing requirement information, and sending the first sensing requirement information to the first sensing function network element, where the second sensing requirement information is determined by the first sensing function network element or the first sensing node scheduled by the first sensing function network element.

This implementation is the same as the implementation solution in the method embodiment shown in FIG. 2 in which the core network element determines the first sensing function network element according to the first sensing requirement information, and sends the first sensing requirement information to the first sensing function network element, so that the first sensing function network element determines the first sensing node correspondingly, or the first sensing node determines whether to perform the first sensing process according to own capability configuration information, and has the same beneficial effects. Details are not described herein again.

Optionally, the determining, by the core network element, the third sensing function network element that supports the sensing service type corresponding to the second sensing requirement information as the second sensing function network element includes:
sending, by the core network element, the second sensing requirement information to the third sensing function network element, and receiving second feedback information from the third sensing function network element; and
determining, by the core network element according to the second feedback information, the third sensing function network element that supports the sensing service type corresponding to the second sensing requirement information as the second sensing function network element.

In this implementation, the process of determining the second sensing function network element by the core network element is similar to the process of determining the first sensing function network element by the core network element according to the first sensing requirement information. Details are not described herein again.

Optionally, after the sending, by the core network element, the second sensing requirement information to the second sensing node scheduled by the second sensing function network element, the method further includes:
receiving, by the core network element, a first sensing measurement quantity and/or a first sensing result from the first sensing function network element;
receiving, by the core network element, a second sensing measurement quantity and/or a second sensing result from the second sensing function network element, where the second sensing measurement quantity is determined by the second sensing node; and
determining, by the core network element, a target sensing result according to the first sensing measurement quantity and/or the first sensing result, and the second sensing measurement quantity and/or the second sensing result.

This implementation is the same as the implementation solution in the method embodiment shown in FIG. 2 in which the core network element calculates the target sensing result according to the first sensing measurement quantity and/or the first sensing result, and the second sensing measurement quantity and/or the second sensing result, and has the same beneficial effects. Details are not described herein again.

Optionally, after the sending, by the core network element, the second sensing requirement information to the second sensing node scheduled by the second sensing function network element, the method further includes:
receiving, by the core network element, a second sensing measurement quantity and/or a second sensing result from the second sensing function network element, where the second sensing measurement quantity and/or the second sensing result is determined by the second sensing node;
sending, by the core network element, the second sensing measurement quantity and/or the second sensing result to the first sensing function network element; and
receiving, by the core network element, a target sensing result from the first sensing function network element.

In a specific implementation, the target sensing result received by the core network element from the first sensing function network element may be calculated by the first sensing function network element or the first sensing node according to the first sensing measurement quantity and the second sensing measurement quantity and/or the second sensing result.

This implementation is the same as the implementation solution in the method embodiment shown in FIG. 2 in which the first sensing function network element or the first sensing node calculates the target sensing result according to the first sensing measurement quantity, the second sensing measurement quantity and/or the second sensing result, and has the same beneficial effects. Details are not described herein again.

The process in the third wireless sensing collaboration method provided in this embodiment of this application corresponds to the process performed by the core network element in the method embodiment shown in FIG. 2, and has the same beneficial effects. Details are not described herein again.

It should be noted that, for the wireless sensing collaboration method provided in embodiments of this application, the execution body may be a wireless sensing collaboration apparatus, or a control module in the wireless sensing collaboration apparatus for performing the wireless sensing collaboration method. In this embodiment of this application, the wireless sensing collaboration apparatus provided in embodiments of this application is described by taking the wireless sensing collaboration method performed by the wireless sensing collaboration apparatus as an example.

Refer to FIG. 5. A first wireless sensing collaboration apparatus 500 provided in an embodiment of this application can be used in a first sensing function network element. As shown in FIG. 5, the first wireless sensing collaboration apparatus 500 may include:
a first obtaining module 501, configured to obtain first sensing requirement information;
a first determining module 502, configured to determine a first sensing node and a second sensing node according to the first sensing requirement information, and obtain respective sensing requirement information of the first sensing node and the second sensing node; and
a second obtaining module 503, configured to obtain a target sensing result, where the target sensing result is determined according to results of target collaborative sensing performed by the first sensing node and the second sensing node respectively according to respective sensing requirement information.

Optionally, the first determining module 502 includes:
a first determining unit, configured to determine the first sensing node and a type of a target sensing collaboration according to the first sensing requirement information, and send the first sensing requirement information to the first sensing node; or
a second determining unit, configured to determine the first sensing node according to the first sensing requirement information, send the first sensing requirement information to the first sensing node, and receive the type of the target sensing collaboration from the first sensing node.

Optionally, the first determining module 502 includes:
a third determining unit, configured to determine second sensing requirement information and the second sensing node according to the type of the target sensing collaboration and the first sensing requirement information, and send the second sensing requirement information to the second sensing node; or
a first transmission unit, configured to receive the second sensing requirement information from the first sensing node, determine the second sensing node according to the second sensing requirement information and the type of the target sensing collaboration, and send the second sensing requirement information to the second sensing node.

Optionally, the second obtaining module 503 includes:
a first obtaining unit, configured to obtain a first measurement quantity and/or a first sensing result measured by the first sensing node by performing a first sensing process;
a second obtaining unit, configured to obtain a second measurement quantity and/or a second sensing result measured by the second sensing node by performing a second sensing process, where the target collaborative sensing includes the first sensing process and the second sensing process; and
a third obtaining unit, configured to determine the target sensing result corresponding to the first sensing requirement information according to the first measurement quantity and/or the first sensing result, and the second measurement quantity and/or the second sensing result; or send the first measurement quantity and/or the first sensing result, and the second measurement quantity and/or the second sensing result to a core network element, and receive the target sensing result corresponding to the first sensing requirement information from the core network element;
   or
a fourth obtaining unit, configured to obtain the second measurement quantity and/or the second sensing result measured by the second sensing node by performing the second sensing process, and send the second measurement quantity and/or the second sensing result to the first sensing node; and
a fifth obtaining unit, configured to receive the target sensing result corresponding to the first sensing requirement information from the first sensing node.

Optionally, the first wireless sensing collaboration apparatus 500 further includes:
a fifth determining module, configured to determine first sensing signal related configuration information according to the first sensing requirement information and capability configuration information of the first sensing node, and send the first sensing signal related configuration information to the first sensing node; or receive the first sensing signal related configuration information from the first sensing node, where the first sensing signal related configuration information is used for configuring a first signal for the first sensing node to perform the first sensing process.

Optionally, the first wireless sensing collaboration apparatus 500 further includes:
a sixth determining module, configured to determine second sensing signal related configuration information according to the second sensing requirement information and capability configuration information of the second sensing node, and send the second sensing signal related configuration information to the second sensing node; or receive the second sensing signal related configuration information from the second sensing node, where the second sensing signal related configuration information is used for configuring a second signal for the second sensing node to perform the second sensing process.

Optionally, the first sensing signal related configuration information includes at least one of the following:
a waveform, an orthogonal frequency division multiplexing OFDM subcarrier spacing, a bandwidth, a frequency, a duty cycle, a beam width, a beam direction, a polarization parameter, power, and a signal processing cycle; and/or
the second sensing signal related configuration information includes at least one of the following:
   a waveform, an OFDM subcarrier spacing, a bandwidth, a frequency, a duty cycle, a beam width, a beam direction, a polarization parameter, power, and a signal processing cycle.

Optionally, the first determining module 502 includes:
a first selection unit, configured to select a third sensing node according to the first sensing requirement information, and send the first sensing requirement information to the third sensing node;
a second receiving module, configured to receive first feedback information from the third sensing node; and
a seventh determining module, configured to determine, according to the first feedback information, the third sensing node that supports execution of the first sensing process as the first sensing node.

Optionally, the first determining module 502 includes:
an eighth determining module, configured to determine the first sensing node according to the first sensing requirement information and capability configuration information of each sensing node.

Optionally, the type of the target sensing collaboration includes any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

Optionally, the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

Optionally, in a case that the second sensing node is scheduled by the second sensing function network element, the first wireless sensing collaboration apparatus 500 further includes:
a second sending module, configured to send the second sensing requirement information to the core network element, where the second sensing requirement information is used for determining the second sensing function network element and the second sensing node.

Optionally, the first sensing requirement information includes at least one of the following: a sensing target, sensing target prior information, a sensing indicator, and a sensing measurement quantity.

Optionally, the sensing measurement quantity includes at least one of the following:
a first-level measurement quantity that is a measurement quantity to be measured by performing a sensing process;
a second-level measurement quantity that is a measurement quantity obtained by performing first preset processing on the first-level measurement quantity; and
a third-level measurement quantity that is a measurement quantity obtained by performing second preset processing on the first-level measurement quantity and/or the second-level measurement quantity.

Optionally, the second-level measurement quantity is calculated by a sensing node or a sensing function network element or a core network element according to the first-level measurement quantity; and
the third-level measurement quantity is calculated by the sensing node or the sensing function network element or the core network element according to the first-level measurement quantity and/or the second-level measurement quantity.

The first wireless sensing collaboration apparatus 500 provided in this embodiment of this application can implement the processes performed by the first sensing function network element in the method embodiment shown in FIG. 2, and can achieve the same beneficial effects. To avoid repetition, details are not described herein again.

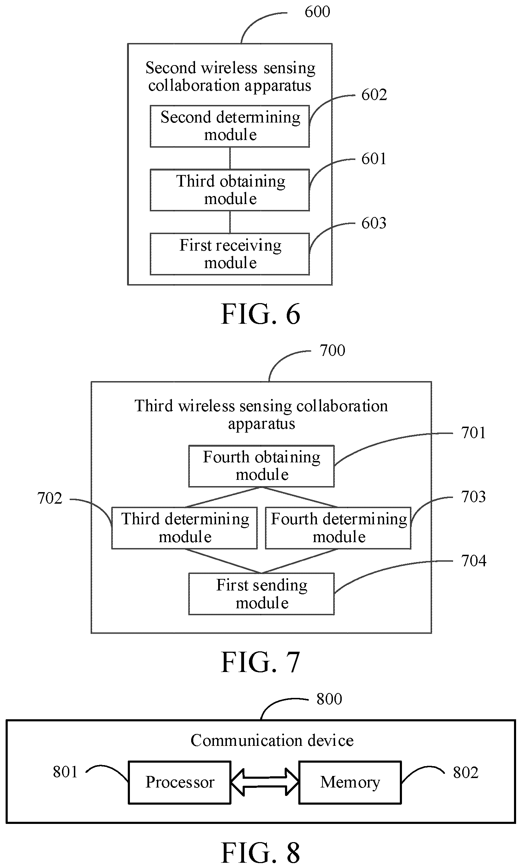

Refer to FIG. 6. A second wireless sensing collaboration apparatus 600 provided in an embodiment of this application can be used in a first sensing node. As shown in FIG. 6, the second wireless sensing collaboration apparatus 600 may include:
a third obtaining module 601, configured to obtain first sensing requirement information;
a second determining module 602, configured to determine a type of a target sensing collaboration according to own capability configuration information and the first sensing requirement information, and send the type of the target sensing collaboration; or
a first receiving module 603, configured to receive the type of the target sensing collaboration.

It should be noted that in a specific implementation, the second wireless sensing collaboration apparatus 600 may include only one of the second determining module 602 and the first receiving module 603, or may include both the second determining module 602 and the first receiving module 603. In the apparatus embodiment shown in FIG. 6, an example in which the second wireless sensing collaboration apparatus 600 includes both the second determining module 602 and the first receiving module 603 is used for illustration.

Optionally, the second wireless sensing collaboration apparatus 600 further includes:
a first execution module, configured to perform a first sensing process to measure a first sensing measurement quantity;
a fifth obtaining module, configured to obtain a second sensing measurement quantity measured by a second sensing node or obtain a second sensing result calculated by the second sensing node according to the second sensing measurement quantity; and
a first calculation module, configured to calculate a target sensing result according to the first sensing measurement quantity and the second sensing measurement quantity and/or the second sensing result.

Optionally, the second wireless sensing collaboration apparatus 600 further includes:
a second execution module, configured to perform a first sensing process to measure a first sensing measurement quantity and/or a first sensing result, and send the first sensing measurement quantity and/or the first sensing result to the first sensing function network element.

Optionally, the second wireless sensing collaboration apparatus 600 further includes:
a ninth determining module, configured to determine own first signal related configuration information according to own capability configuration information and the first sensing requirement information;
   or
a tenth determining module, configured to determine own first signal related configuration information according to own capability configuration information and the first sensing requirement information, determine a recommended value of second signal related configuration information of a second sensing node, and send the recommended value of the second signal related configuration information.

Optionally, the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

Optionally, the type of the target sensing collaboration includes any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

The second wireless sensing collaboration apparatus 600 provided in this embodiment of this application can implement the processes performed by the first sensing node in the method embodiment shown in FIG. 3, and can achieve the same beneficial effects. To avoid repetition, details are not described herein again.

Refer to FIG. 7. A third wireless sensing collaboration apparatus 700 provided in an embodiment of this application can be used in a core network element. As shown in FIG. 7, the third wireless sensing collaboration apparatus 700 may include:
a fourth obtaining module 701, configured to receive second sensing requirement information from a first sensing function network element;
a third determining module 702, configured to determine, according to the second sensing requirement information and a sensing service type supported by each sensing function network element, a second sensing function network element used for target collaborative sensing with the first sensing function network element, and determine a second sensing node scheduled by the second sensing function network element or receive identification information of the second sensing node from the second sensing function network element; or
a fourth determining module 703, configured to determine a third sensing function network element according to the second sensing requirement information, determine the third sensing function network element that supports a sensing service type corresponding to the second sensing requirement information as the second sensing function network element, and determine a second sensing node scheduled by the second sensing function network element or receive identification information of the second sensing node from the second sensing function network element; and
a first sending module 704, configured to send the second sensing requirement information to the second sensing node.

It should be noted that in an implementation, the third wireless sensing collaboration apparatus 700 may include only one of the third determining module 702 and the fourth determining module 703, or may include both the third determining module 702 and the fourth determining module 703. In the embodiment shown in FIG. 7, an example in which the third wireless sensing collaboration apparatus 700 includes both the third determining module 702 and the fourth determining module 703 is used for illustration. This is not specifically limited herein.

Optionally, the third wireless sensing collaboration apparatus 700 further includes:
a sixth obtaining module, configured to obtain first sensing requirement information; and
a twelfth determining module, configured to determine the first sensing function network element according to the first sensing requirement information, and send the first sensing requirement information to the first sensing function network element, where the second sensing requirement information is determined by the first sensing function network element or the first sensing node scheduled by the first sensing function network element.

Optionally, the fourth determining module 703 includes:
a first sending unit, configured to send the second sensing requirement information to the third sensing function network element, and receive second feedback information from the third sensing function network element; and
a fourth determining unit, configured to determine, according to the second feedback information, the third sensing function network element that supports the sensing service type corresponding to the second sensing requirement information as the second sensing function network element.

Optionally, the third wireless sensing collaboration apparatus 700 further includes:
a third receiving module, configured to receive a first sensing measurement quantity and/or a first sensing result from the first sensing function network element;
a fourth receiving module, configured to receive a second sensing measurement quantity and/or a second sensing result from the second sensing function network element, where the second sensing measurement quantity is determined by the second sensing node; and
a thirteenth determining module, configured to determine a target sensing result according to the first sensing measurement quantity and/or the first sensing result, and the second sensing measurement quantity and/or the second sensing result.

Optionally, the third wireless sensing collaboration apparatus 700 further includes:
a fifth receiving module, configured to receive a second sensing measurement quantity and/or a second sensing result from the second sensing function network element, where the second sensing measurement quantity and/or the second sensing result is determined by the second sensing node;
a second sending module, configured to send the second sensing measurement quantity and/or the second sensing result to the first sensing function network element; and
a sixth receiving module, configured to receive a target sensing result from the first sensing function network element.

The third wireless sensing collaboration apparatus 700 provided in this embodiment of this application can implement the processes performed by the core network element in the method embodiment shown in FIG. 4, and can achieve the same beneficial effects. To avoid repetition, details are not described herein again.

Optionally, as shown in FIG. 8, an embodiment of this application further provide a communication device 800, including a processor 801, a memory 802, and a program or instructions stored in the memory 802 and executable on the processor 801. For example, when the communication device 800 is a terminal (for example, the first sensing node is a terminal), the program or the instructions, when executed by the processor 801, implement the processes of the method embodiment shown in FIG. 3, and can achieve the same technical effects. When the communication device 800 is a network side device (for example, the first sensing function network element, the core network element, or the first sensing node), the program or the instructions, when executed by the processor 801, implement the processes of the method embodiment shown in FIG. 2, FIG. 3, or FIG. 4, and can achieve the same technical effects. To avoid repetition, details are not described herein again.

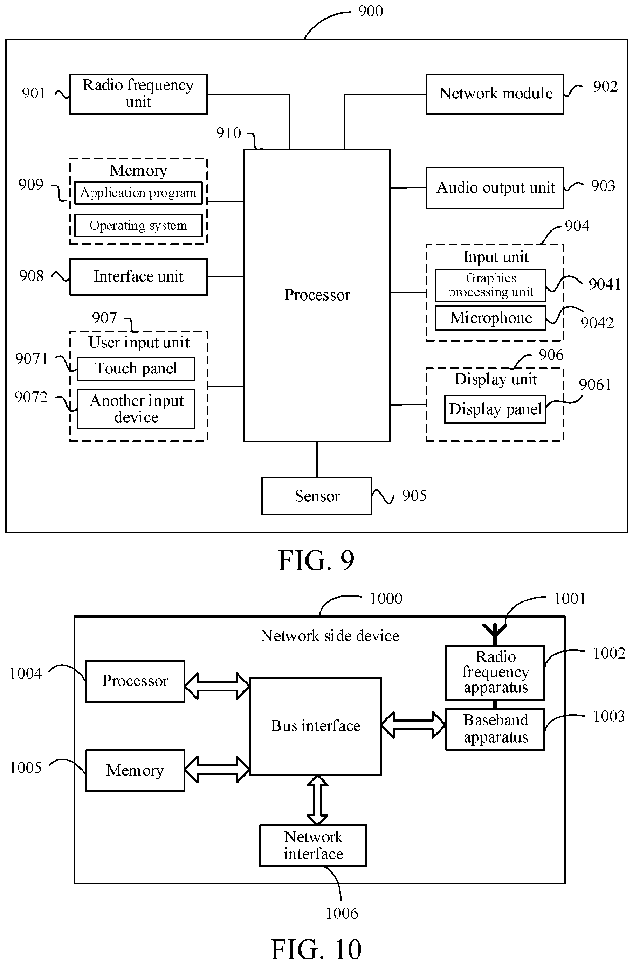

An embodiment of this application further provides a terminal, including a processor and a communication interface. The communication interface is configured to obtain first sensing requirement information; the processor is configured to determine a type of a target sensing collaboration according to capability configuration information of a first sensing node and the first sensing requirement information; and the communication interface is further configured to send the type of the target sensing collaboration. This terminal embodiment corresponds to the foregoing method embodiment on the first sensing node side (where the first sensing node includes a terminal). Each implementation process and implementation of the foregoing method embodiment can be applied to this terminal embodiment, and can achieve the same technical effects. Specifically, FIG. 9 is a schematic structural diagram of hardware of a terminal according to an embodiment of this application.

The terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include the power supply (for example, a battery) for supplying power to the components. The power supply may be logically connected to the processor 910 by using a power management system, thereby implementing functions such as charging, discharging, and power consumption management by using the power management system. A terminal structure shown in FIG. 9 does not constitute a limitation to the terminal, and the terminal may include more or fewer components than those shown in the figure, or some components may be combined, or a different component deployment may be used. Details are not described herein again.

It should be understood that in embodiments of this application, the input unit 904 may include a graphics processing unit (Graphics Processing Unit, GPU) 9041 and a microphone 9042, and the graphics processing unit 9041 processes image data of still images or videos obtained by an image capture apparatus (for example, a camera) in a video capture mode or an image capture mode. The display unit 906 may include a display panel 9061, and the display panel 9061 may be configured in a form such as a liquid crystal display or an organic light-emitting diode. The user input unit 907 includes a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional key (for example, a volume control key or a switch key), a track ball, a mouse, and a joystick, which are not repeated herein.

In this embodiment of this application, after the radio frequency unit 901 receives downlink data from a network side device, the downlink data is processed by the processor 910. In addition, uplink data is sent to the network side device. Generally, the radio frequency unit 901 includes, but is not limited to, an antenna, at least one amplifier, a transceiver, a coupler, a low noise amplifier, a duplexer, and the like.

The memory 909 may be configured to store software programs or instructions, and various pieces of data. The memory 909 may mainly include a program or instruction storage area and a data storage area. The program or instruction storage area may store an operating system, an application program or instruction required by at least one function (for example, a sound playing function and an image playing function), or the like. In addition, the memory 909 may include a high speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The memory may include, for example, at least one magnetic disk storage device, a flash memory, or other volatile solid-state storage devices.

The processor 910 may include one or more processing units. Optionally, the processor 910 may integrate an application processor and a modem processor. The application processor mainly processes an operating system, a user interface, an application program, instructions, and the like. The modem processor mainly processes wireless communication, and may be, for example, a baseband processor. It may be understood that the foregoing modem processor may not be integrated into the processor 910.

The radio frequency unit 901 is configured to obtain first sensing requirement information;
the processor 910 is configured to determine a type of a target sensing collaboration according to own capability configuration information and the first sensing requirement information; and
the radio frequency unit 901 is further configured to send the type of the target sensing collaboration.

Optionally, after the radio frequency unit 901 sends the type of the target sensing collaboration,
the processor 910 is further configured to perform a first sensing process to measure a first sensing measurement quantity;
the radio frequency unit 901 is further configured to obtain a second sensing measurement quantity measured by a second sensing node or obtain a second sensing result calculated by the second sensing node according to the second sensing measurement quantity; and
the processor 910 is further configured to calculate a target sensing result according to the first sensing measurement quantity and the second sensing measurement quantity and/or the second sensing result.

Optionally, after the radio frequency unit 901 sends the type of the target sensing collaboration,
the processor 910 is further configured to perform a first sensing process to measure a first sensing measurement quantity and/or a first sensing result, and control the radio frequency unit 901 to send the first sensing measurement quantity and/or the first sensing result to the first sensing function network element.

Optionally, after determining a type of a target sensing collaboration according to own capability configuration information and the first sensing requirement information, the processor 910 is further configured to:
determine own first signal related configuration information according to own capability configuration information and the first sensing requirement information;
   or
determine own first signal related configuration information according to own capability configuration information and the first sensing requirement information, determine a recommended value of second signal related configuration information of a second sensing node, and control the radio frequency unit 901 to send the recommended value of the second signal related configuration information.

Optionally, the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

Optionally, the type of the target sensing collaboration includes any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

The terminal 900 provided in this embodiment of this application can implement the processes performed by the first sensing node in the method embodiment shown in FIG. 3, and can achieve the same beneficial effects. To avoid repetition, details are not described herein again.

An embodiment of this application further provides a network side device, including a processor and a communication interface. The communication interface is configured to obtain first sensing requirement information; the processor is configured to determine a first sensing node and a second sensing node according to the first sensing requirement information, and obtain respective sensing requirement information of the first sensing node and the second sensing node; and the processor or the communication interface is further configured to obtain a target sensing result, where the target sensing result is determined according to results of target collaborative sensing performed by the first sensing node and the second sensing node respectively according to respective sensing requirement information;
or
the communication interface is configured to obtain first sensing requirement information; the processor is configured to determine a type of a target sensing collaboration according to capability configuration information of a first sensing node and the first sensing requirement information; and the communication interface is further configured to send the type of the target sensing collaboration;
   or
the communication interface is configured to receive second sensing requirement information from a first sensing function network element; the processor is configured to determine, according to the second sensing requirement information and a sensing service type supported by each sensing function network element, a second sensing function network element used for target collaborative sensing with the first sensing function network element, and determine a second sensing node scheduled by the second sensing function network element or receive identification information of the second sensing node from the second sensing function network element; or the processor is configured to determine a third sensing function network element according to the second sensing requirement information, determine the third sensing function network element that supports a sensing service type corresponding to the second sensing requirement information as the second sensing function network element, and determine a second sensing node scheduled by the second sensing function network element or receive identification information of the second sensing node from the second sensing function network element; and the communication interface is further configured to send the second sensing requirement information to the second sensing node.

This network side device embodiment corresponds to the foregoing method embodiments on the first sensing function network element, the first sensing node (that is, the first sensing node includes the network side device), and the core network element side. Each implementation process and implementation of the foregoing method embodiment can be applied to this network side device embodiment, and can achieve the same technical effects.

Specifically, an embodiment of this application further provides a network side device. As shown in FIG. 10, the network device 1000 includes: an antenna 1001, a radio frequency apparatus 1002, and a baseband apparatus 1003. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes information to be sent, and sends the information to the radio frequency apparatus 1002. The radio frequency apparatus 1002 processes the received information and sends the information by using the antenna 1001.

The frequency band processing apparatus may be located in the baseband apparatus 1003, and the method performed by the network side device in the foregoing embodiment may be implemented in the baseband apparatus 1003, where the baseband apparatus 1003 includes a processor 1004 and a memory 1005.

The baseband apparatus 1003 may include, for example, at least one baseband plate. A plurality of chips are disposed on the baseband plate. As shown in FIG. 10, one of the plurality of chips is, for example, the processor 1004, and is connected to the memory 1005, to invoke a program in the memory 1005 to perform operations of the network device in the foregoing method embodiment.

The baseband apparatus 1003 may further include a network interface 1006, configured to exchange information with the radio frequency apparatus 1002. The interface is, for example, a common public radio interface (common public radio interface, CPRI).

Specifically, the network side device provided in this embodiment of the present invention further includes: instructions or a program stored in the memory 1005 and executable on the processor 1004. The processor 1004 invokes the instructions or the program in the memory 1005 to perform the method executed by each module shown in FIG. 5, FIG. 6, or FIG. 7, and achieve the same technical effects. To avoid repetition, details are not repeated herein.

An embodiment of this application further provides a readable storage medium. The readable storage medium may be non-volatile or volatile. The readable storage medium stores a program or instructions, where the program or the instructions, when executed by a processor, implement the processes of the method embodiment shown in FIG. 2, FIG. 3, or FIG. 4, and achieve the same technical effects, which is not described herein again to avoid repetition.

The processor is the processor in the terminal described in the foregoing embodiment. The readable storage medium includes a computer-readable storage medium, and is, for example, a read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions, to implement the processes of method embodiment shown in FIG. 2, FIG. 3, or FIG. 4, and achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program product, stored in a non-transient storage medium, where the computer program product is executed by at least one processor to implement the processes of the method shown in FIG. 2, FIG. 3, or FIG. 4, and can achieve the same technical effects. To avoid repetition, details are not described herein again.

It should be noted that the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A wireless sensing collaboration method, applied to a first sensing function network element, the method comprising:
obtaining, by a first sensing function network element, first sensing requirement information;
determining, by the first sensing function network element, a first sensing node and a second sensing node according to the first sensing requirement information, and obtaining respective sensing requirement information of the first sensing node and the second sensing node; and
obtaining, by the first sensing function network element, a target sensing result, wherein the target sensing result is determined according to results of target collaborative sensing performed by the first sensing node and the second sensing node respectively according to respective sensing requirement information.

2. The method according to claim 1, wherein the determining, by the first sensing function network element, a first sensing node according to the first sensing requirement information comprises:
determining, by the first sensing function network element, the first sensing node and a type of a target sensing collaboration according to the first sensing requirement information, and sending the first sensing requirement information to the first sensing node; or
determining, by the first sensing function network element, the first sensing node according to the first sensing requirement information, sending the first sensing requirement information to the first sensing node, and receiving the type of the target sensing collaboration from the first sensing node.

3. The method according to claim 2, wherein the determining, by the first sensing function network element, a second sensing node according to the first sensing requirement information comprises:
determining, by the first sensing function network element, second sensing requirement information and the second sensing node according to the type of the target sensing collaboration and the first sensing requirement information, and sending the second sensing requirement information to the second sensing node; or
receiving, by the first sensing function network element, the second sensing requirement information from the first sensing node, determining the second sensing node according to the second sensing requirement information and the type of the target sensing collaboration, and sending the second sensing requirement information to the second sensing node.

4. The method according to claim 1, wherein the obtaining, by the first sensing function network element, a target sensing result comprises:
obtaining, by the first sensing function network element, a first measurement quantity and/or a first sensing result measured by the first sensing node by performing a first sensing process;
obtaining, by the first sensing function network element, a second measurement quantity and/or a second sensing result measured by the second sensing node by performing a second sensing process, wherein the target collaborative sensing comprises the first sensing process and the second sensing process; and
determining, by the first sensing function network element, the target sensing result corresponding to the first sensing requirement information according to the first measurement quantity and/or the first sensing result, and the second measurement quantity and/or the second sensing result; or sending, by the first sensing function network element, the first measurement quantity and/or the first sensing result, and the second measurement quantity and/or the second sensing result to a core network element, and receiving the target sensing result corresponding to the first sensing requirement information from the core network element;
or
obtaining, by the first sensing function network element, the second measurement quantity and/or the second sensing result measured by the second sensing node by performing the second sensing process, and sending the second measurement quantity and/or the second sensing result to the first sensing node; and
receiving, by the first sensing function network element, the target sensing result corresponding to the first sensing requirement information from the first sensing node.

5. The method according to claim 2, wherein after the sending, by the first sensing function network element, the first sensing requirement information to the first sensing node, the method further comprises:
determining, by the first sensing function network element, first sensing signal related configuration information according to the first sensing requirement information and capability configuration information of the first sensing node, and sending the first sensing signal related configuration information to the first sensing node; or receiving, by the first sensing function network element, the first sensing signal related configuration information from the first sensing node, wherein the first sensing signal related configuration information is used for configuring a first signal for the first sensing node to perform the first sensing process.

6. The method according to claim 3, wherein after the sending, by the first sensing function network element, the second sensing requirement information to the second sensing node, the method further comprises:
determining, by the first sensing function network element, second sensing signal related configuration information according to the second sensing requirement information and capability configuration information of the second sensing node, and sending the second sensing signal related configuration information to the second sensing node; or receiving, by the first sensing function network element, the second sensing signal related configuration information from the second sensing node, wherein the second sensing signal related configuration information is used for configuring a second signal for the second sensing node to perform the second sensing process.

7. The method according to claim 5, wherein the first sensing signal related configuration information comprises at least one of the following:
a waveform, an orthogonal frequency division multiplexing OFDM subcarrier spacing, a bandwidth, a frequency, a duty cycle, a beam width, a beam direction, a polarization parameter, power, and a signal processing cycle; and/or
the second sensing signal related configuration information comprises at least one of the following:
a waveform, an OFDM subcarrier spacing, a bandwidth, a frequency, a duty cycle, a beam width, a beam direction, a polarization parameter, power, and a signal processing cycle.

8. The method according to claim 5, wherein the determining, by the first sensing function network element, a first sensing node according to the first sensing requirement information comprises:
selecting, by the first sensing function network element, a third sensing node according to the first sensing requirement information, and sending the first sensing requirement information to the third sensing node;
receiving, by the first sensing function network element, first feedback information from the third sensing node; and
determining, by the first sensing function network element according to the first feedback information, the third sensing node that supports execution of the first sensing process as the first sensing node.

9. The method according to claim 1, wherein the determining, by the first sensing function network element, a first sensing node according to the first sensing requirement information comprises:
determining, by the first sensing function network element, the first sensing node according to the first sensing requirement information and capability configuration information of each sensing node.

10. The method according to claim 1, wherein the type of the target sensing collaboration comprises any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

11. The method according to any one of claims 1 to 10, wherein the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

12. The method according to claim 11, wherein in a case that the second sensing node is scheduled by the second sensing function network element, the method further comprises:
sending, by the first sensing function network element, the second sensing requirement information to the core network element, wherein the second sensing requirement information is used for determining the second sensing function network element and the second sensing node.

13. The method according to any one of claims 1 to 10, wherein the first sensing requirement information comprises at least one of the following: a sensing target, sensing target prior information, a sensing indicator, and a sensing measurement quantity.

14. The method according to claim 13, wherein the sensing measurement quantity comprises at least one of the following:
a first-level measurement quantity that is a measurement quantity to be measured by performing a sensing process;
a second-level measurement quantity that is a measurement quantity obtained by performing first preset processing on the first-level measurement quantity; and
a third-level measurement quantity that is a measurement quantity obtained by performing second preset processing on the first-level measurement quantity and/or the second-level measurement quantity.

15. The method according to claim 14, wherein the second-level measurement quantity is calculated by a sensing node or a sensing function network element or a core network element according to the first-level measurement quantity; and
the third-level measurement quantity is calculated by the sensing node or the sensing function network element or the core network element according to the first-level measurement quantity and/or the second-level measurement quantity.

16. A wireless sensing collaboration apparatus, used in a first sensing function network element, the apparatus comprising:
a first obtaining module, configured to obtain first sensing requirement information;
a first determining module, configured to determine a first sensing node and a second sensing node according to the first sensing requirement information, and obtain respective sensing requirement information of the first sensing node and the second sensing node; and
a second obtaining module, configured to obtain a target sensing result, wherein the target sensing result is determined according to results of target collaborative sensing performed by the first sensing node and the second sensing node respectively according to respective sensing requirement information.

17. The apparatus according to claim 16, wherein the type of the target sensing collaboration comprises any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

18. A wireless sensing collaboration method, applied to a first sensing node, the method comprising:
obtaining, by the first sensing node, first sensing requirement information;
determining, by the first sensing node, a type of a target sensing collaboration according to own capability configuration information and the first sensing requirement information, and sending the type of the target sensing collaboration; or
receiving, by the first sensing node, the type of the target sensing collaboration.

19. The method according to claim 18, wherein after the sending or receiving, by the first sensing node, the type of the target sensing collaboration, the method further comprises:
performing, by the first sensing node, a first sensing process to measure a first sensing measurement quantity;
obtaining, by the first sensing node, a second sensing measurement quantity measured by a second sensing node or obtaining a second sensing result calculated by the second sensing node according to the second sensing measurement quantity; and
calculating, by the first sensing node, a target sensing result according to the first sensing measurement quantity and the second sensing measurement quantity and/or the second sensing result.

20. The method according to claim 18, wherein after the sending or receiving, by the first sensing node, the type of the target sensing collaboration, the method further comprises:
performing, by the first sensing node, a first sensing process to measure a first sensing measurement quantity and/or a first sensing result, and sending the first sensing measurement quantity and/or the first sensing result to a first sensing function network element.

21. The method according to claim 18, wherein after the determining, by the first sensing node, a type of a target sensing collaboration according to own capability configuration information and the first sensing requirement information, the method further comprises:
determining, by the first sensing node, own first signal related configuration information according to own capability configuration information and the first sensing requirement information;
or
determining, by the first sensing node, own first signal related configuration information according to own capability configuration information and the first sensing requirement information, determining a recommended value of second signal related configuration information of a second sensing node, and sending the recommended value of the second signal related configuration information.

22. The method according to claim 19 or 21, wherein the second sensing node meets at least one of the following:
having a sensing type the same as that of the first sensing node, or having a sensing type different from that of the first sensing node;
scheduled by the first sensing function network element, or scheduled by a second sensing function network element; and
the second sensing node is a reference station.

23. The method according to any one of claims 18 to 21, wherein the type of the target sensing collaboration comprises any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

24. A wireless sensing collaboration apparatus, used in a first sensing node, the apparatus comprising:
a third obtaining module, configured to obtain first sensing requirement information;
a second determining module, configured to determine a type of a target sensing collaboration according to own capability configuration information and the first sensing requirement information, and send the type of the target sensing collaboration; or
a first receiving module, configured to receive the type of the target sensing collaboration.

25. The apparatus according to claim 24, wherein the type of the target sensing collaboration comprises any one of the following:
the target collaborative sensing performed by sensing nodes of different sensing types coordinated by a same sensing function network element collaboratively;
the target collaborative sensing performed by sensing nodes of a same sensing type coordinated by a same sensing function network element collaboratively; and
the target collaborative sensing performed by different sensing function network elements collaboratively.

26. A wireless sensing collaboration method, applied to a core network element, the method comprising:
receiving, by the core network element, second sensing requirement information from a first sensing function network element;
determining, by the core network element according to the second sensing requirement information and a sensing service type supported by each sensing function network element, a second sensing function network element used for target collaborative sensing with the first sensing function network element, and determining a second sensing node scheduled by the second sensing function network element or receiving identification information of the second sensing node from the second sensing function network element; or
determining, by the core network element, a third sensing function network element according to the second sensing requirement information, determining the third sensing function network element that supports a sensing service type corresponding to the second sensing requirement information as the second sensing function network element, and determining a second sensing node scheduled by the second sensing function network element or receiving identification information of the second sensing node from the second sensing function network element; and
sending, by the core network element, the second sensing requirement information to the second sensing node.

27. The method according to claim 26, wherein after the receiving, by the core network element, second sensing requirement information from a first sensing function network element, the method further comprises:
obtaining, by the core network element, first sensing requirement information; and
determining, by the core network element, the first sensing function network element according to the first sensing requirement information, and sending the first sensing requirement information to the first sensing function network element, wherein the second sensing requirement information is determined by the first sensing function network element or the first sensing node scheduled by the first sensing function network element.

28. The method according to claim 26, wherein the determining, by the core network element, the third sensing function network element that supports a sensing service type corresponding to the second sensing requirement information as the second sensing function network element comprises:
sending, by the core network element, the second sensing requirement information to the third sensing function network element, and receiving second feedback information from the third sensing function network element; and
determining, by the core network element according to the second feedback information, the third sensing function network element that supports the sensing service type corresponding to the second sensing requirement information as the second sensing function network element.

29. The method according to claim 26, wherein after the sending, by the core network element, the second sensing requirement information to the second sensing node scheduled by the second sensing function network element, the method further comprises:
receiving, by the core network element, a first sensing measurement quantity and/or a first sensing result from the first sensing function network element;
receiving, by the core network element, a second sensing measurement quantity and/or a second sensing result from the second sensing function network element, wherein the second sensing measurement quantity is determined by the second sensing node; and
determining, by the core network element, a target sensing result according to the first sensing measurement quantity and/or the first sensing result, and the second sensing measurement quantity and/or the second sensing result.

30. The method according to claim 26, wherein after the sending, by the core network element, the second sensing requirement information to the second sensing node scheduled by the second sensing function network element, the method further comprises:
receiving, by the core network element, a second sensing measurement quantity and/or a second sensing result from the second sensing function network element, wherein the second sensing measurement quantity and/or the second sensing result is determined by the second sensing node;
sending, by the core network element, the second sensing measurement quantity and/or the second sensing result to the first sensing function network element; and
receiving, by the core network element, a target sensing result from the first sensing function network element.

31. A wireless sensing collaboration apparatus, used in a core network element, the apparatus comprising:
a fourth obtaining module, configured to receive second sensing requirement information from a first sensing function network element;
a third determining module, configured to determine, according to the second sensing requirement information and a sensing service type supported by each sensing function network element, a second sensing function network element used for target collaborative sensing with the first sensing function network element, and determine a second sensing node scheduled by the second sensing function network element or receive identification information of the second sensing node from the second sensing function network element; or
a fourth determining module, configured to determine a third sensing function network element according to the second sensing requirement information, determine the third sensing function network element that supports a sensing service type corresponding to the second sensing requirement information as the second sensing function network element, and determine a second sensing node scheduled by the second sensing function network element or receive identification information of the second sensing node from the second sensing function network element; and
a first sending module, configured to send the second sensing requirement information to the second sensing node.

32. A network side device, comprising a processor, a memory, and a program or instructions stored in the memory and executable on the processor, wherein the program or the instructions, when executed by the processor, implement the steps of the wireless sensing collaboration method according to any one of claims 1 to 15, or implement the steps of the wireless sensing collaboration method according to any one of claims 18 to 23, or implement the steps of the wireless sensing collaboration method according to any one of claims 26 to 30.

33. A terminal, comprising a processor, a memory, and a program or instructions stored in the memory and executable on the processor, wherein the program or the instructions, when executed by the processor, implement the steps of the wireless sensing collaboration method according to any one of claims 18 to 23.

34. A readable storage medium, storing a program or instructions, wherein the program or the instructions, when executed by a processor, implement the steps of the wireless sensing collaboration method according to any one of claims 1 to 15, or implement the steps of the wireless sensing collaboration method according to any one of claims 18 to 23, or implement the steps of the wireless sensing collaboration method according to any one of claims 26 to 30.
